# EUROPEAN PATENT APPLICATION

(11) **EP 4 843 948 A1**
(43) Date of publication of application: **25.11.2026**
(21) Application number: 25758160.3
(22) Date of filing: 23.01.2025
(51) Int. Cl.: C01B 32/05, C21B 5/00, C21B 11/10, C21C 5/52

(54) **METHOD FOR REDUCING CARBON OXIDE, METHOD FOR PRODUCING STEEL, DEVICE FOR REDUCING CARBON OXIDE, AND DEVICE FOR PRODUCING STEEL**

(30) Priority: 22.02.2024 JP 2024025194
(71) Applicant: KABUSHIKI KAISHA KOBE SEIKO SHO (KOBE STEEL, LTD.), Hyogo 651-8585 (JP)
(72) Inventor: MAEDA, Norihide, Hyogo 651-227 (JP); YATABE, Shota, Hyogo 651-227 (JP)
(74) Representative: Müller-Boré & Partner Patentanwälte PartG mbB
(86) International application number: PCT/JP2025/002059
(87) International publication number: WO 2025/177760

(57) **Abstract**

One aspect of the present invention is a method for reducing a carbon oxide, the method including introducing a gas containing hydrogen and a carbon oxide containing at least one of carbon monoxide and carbon dioxide into a reaction furnace, charging reduced iron into the reaction furnace, and reducing the carbon oxide through a chemical reaction using the gas introduced into the reaction furnace as a reactant and the reduced iron as a catalyst.

## Description

### Technical Field

The present invention relates to a method for reducing a carbon oxide, a method for producing steel, an apparatus for reducing a carbon oxide, and an apparatus for producing steel.

### Background Art

In recent years, carbon dioxide is considered to have a large influence on global warming. As an effective measure against this global warming problem, a technique for obtaining useful substances such as hydrocarbons using carbon dioxide as a reactant has attracted attention. Specific examples of such a technique include a technique in which a carbon oxide such as carbon dioxide is caused to react with hydrogen using a catalyst to obtain a hydrocarbon such as methane. Examples of such a catalyst include catalysts described in Patent Literatures 1 and 2. Patent Literature 1 describes a methanation reaction catalyst that is a fired body of a wet mixture of a salt of Zr, a salt of a stabilizing element such as Y, a salt of Ni, and an inorganic oxide such as silica. Patent Literature 2 describes a methanation reaction catalyst including a stabilized zirconia carrier and Ni supported on the stabilized zirconia carrier.

There is a problem that when the reaction for obtaining a hydrocarbon as described above is performed using a catalyst, catalytic activity of the catalyst gradually decreases because of sintering, carbonization, carbon deposition, and poisoning by impurities such as sulfur compounds. As the catalyst, a catalyst synthesized for a reaction, the catalyst containing Ni, Co, and a noble metal, is often used as in the catalysts described in Patent Literatures 1 and 2. These catalysts are often costly, and it is not realistic to maintain a state in which the activity of the catalyst used for the reaction is high by replacing the catalyst at high frequency. Thus, to suppress the occurrence of sintering, carbonization, and carbon deposition, for example, it is conceivable to set the conditions to cause a mild reaction. Specifically, it is conceivable to set the conditions at the time of the reaction, such as temperature, pressure, and composition, to such conditions that a mild (that is, the reaction rate of the carbon deposition reaction is extremely slow) reaction occurs in which sintering does not occur and carbon does not deposit. However, in the case of such a mild reaction, the yield and the reaction rate decrease, and to realize a suitable reaction, it is necessary to increase the loading amount of the catalyst by enlarging the reaction furnace or the like, which may increase the cost for obtaining hydrocarbons. In addition, to suppress poisoning by impurities, it is also conceivable to remove impurities from the raw material of the reaction before the reaction, but pre-treatment is required, which may increase the cost for obtaining hydrocarbons. Under such circumstances, when a catalyst synthesized for a reaction, the catalyst containing Ni, Co, and a noble metal, is used, it requires significant cost to maintain the catalytic activity in a high state. Thus, it is not practical to use a catalyst synthesized for a reaction, the catalyst containing Ni, Co, and a noble metal, while maintaining the catalyst in a high catalytic activity state.

### Citation List

### Patent Literatures

Patent Literature 1: JP 2018-122247 A
Patent Literature 2: JP 2018-20278 A

### Summary of Invention

The present invention has been made in view of such circumstances, and an object of the present invention is to provide a method for reducing a carbon oxide and an apparatus for reducing a carbon oxide capable of reducing a carbon oxide such as carbon dioxide without using a catalyst containing costly materials such as Ni, Co, and noble metals. Another object of the present invention is to provide a method for producing steel and an apparatus for producing steel that effectively utilize the reduction method.

One aspect of the present invention is a method for reducing a carbon oxide, the method including introducing a gas containing hydrogen and a carbon oxide containing at least one of carbon monoxide and carbon dioxide into a reaction furnace, charging reduced iron into the reaction furnace, and reducing the carbon oxide through a chemical reaction using the gas introduced into the reaction furnace as a reactant and the reduced iron as a catalyst.

Another aspect of the present invention is a method for producing steel, the method including introducing a gas containing hydrogen and a carbon oxide containing at least one of carbon monoxide and carbon dioxide into a reaction furnace, charging reduced iron into the reaction furnace, reducing the carbon oxide through a chemical reaction using the gas introduced into the reaction furnace as a reactant and the reduced iron as a catalyst, measuring a time from when the reduced iron is charged into the reaction furnace, and taking out the reduced iron from the reaction furnace when a predetermined time elapses from when the reduced iron is charged into the reaction furnace, and charging the reduced iron taken out from the reaction furnace into a blast furnace or an electric furnace.

Another aspect of the present invention is an apparatus for reducing a carbon oxide, the apparatus including a reaction furnace, an inflow unit that introduces a gas containing hydrogen and a carbon oxide containing at least one of carbon monoxide and carbon dioxide into the reaction furnace, and a charging unit that charges reduced iron into the reaction furnace, in which the carbon oxide is reduced through a chemical reaction using the gas introduced into the reaction furnace at the inflow unit as a reactant and the reduced iron as a catalyst.

Another aspect of the present invention is an apparatus for producing steel, the apparatus including a reaction furnace, an inflow unit that introduces a gas containing hydrogen and a carbon oxide containing at least one of carbon monoxide and carbon dioxide into the reaction furnace, a charging unit that charges reduced iron into the reaction furnace, a discharge unit that takes out the reduced iron from the reaction furnace when a predetermined time elapses from when the reduced iron is charged into the reaction furnace at the charging unit, and an iron supply unit that charges the reduced iron taken out from the reaction furnace at the discharge unit into a blast furnace or an electric furnace, in which in the reaction furnace, the carbon oxide is reduced through a chemical reaction using the gas introduced into the reaction furnace as a reactant and the reduced iron as a catalyst.

The above and other objects, features, and advantages of the present invention will be apparent from the following detailed description and accompanying drawings.

### Brief Description of Drawings

[FIG. 1] FIG. 1 is a schematic configuration diagram illustrating an example of an apparatus for reducing a carbon oxide according to an embodiment of the present invention.
[FIG. 2] FIG. 2 is a schematic configuration diagram illustrating another example of the apparatus for reducing a carbon oxide according to an embodiment of the present invention.
[FIG. 3] FIG. 3 is a schematic configuration diagram illustrating another example of the apparatus for reducing a carbon oxide according to an embodiment of the present invention.
[FIG. 4] FIG. 4 is a schematic configuration diagram illustrating another example of the apparatus for reducing a carbon oxide according to an embodiment of the present invention.
[FIG. 5] FIG. 5 is a schematic configuration diagram illustrating another example of the apparatus for reducing a carbon oxide according to an embodiment of the present invention.
[FIG. 6] FIG. 6 is a schematic configuration diagram illustrating another example of the apparatus for reducing a carbon oxide according to an embodiment of the present invention.
[FIG. 7] FIG. 7 is a schematic configuration diagram illustrating another example of the apparatus for reducing a carbon oxide according to an embodiment of the present invention.

### Description of Embodiments

As a result of various studies, the inventors of the present invention have found that the above objects are achieved by the present invention described below.

Hereinafter, embodiments according to the present invention will be described, but the present invention is not limited to these.

### [Method for Reducing Carbon Oxide]

A method for reducing a carbon oxide according to an embodiment of the present invention is a method for reducing a carbon oxide, the method including introducing a gas containing hydrogen and a carbon oxide containing at least one of carbon monoxide and carbon dioxide into a reaction furnace, charging reduced iron into the reaction furnace, and reducing the carbon oxide through a chemical reaction using the gas introduced into the reaction furnace as a reactant and the reduced iron as a catalyst. The chemical reaction is not particularly limited as long as it is a reaction using the gas introduced into the reaction furnace as a reactant and the reduced iron as a catalyst. Examples of the chemical reaction include a reverse shift reaction, a methanation reaction, a Sabatier reaction, and a Fischer-Tropsch reaction. The chemical reaction may be one type of reaction or may be a combination of two or more types of reactions. The gas introduced into the reaction furnace is used as a reactant, and the reduced iron charged into the reaction furnace is used as a catalyst. They are caused to react in the chemical reaction such as a reverse shift reaction, whereby a carbon oxide such as carbon dioxide can be reduced without using a catalyst containing costly materials such as Ni, Co, and noble metals. By reducing the carbon oxide such as carbon dioxide, hydrocarbons such as methane and carbon monoxide for obtaining hydrocarbons are obtained, which leads to effective use of carbon dioxide. In addition, the reduced iron used as a catalyst in the reduction method has carbon deposited or carbonized, and thus, the reduced iron taken out from the reaction furnace after the reaction can be effectively used for the production of steel. This makes it possible to exchange the reduced iron as a catalyst with high frequency while suppressing an increase in running cost. Thus, the carbon oxide can be reduced, and at the same time, a high catalytic activity state can be maintained by replacing the catalyst before the catalytic activity greatly decreases. Ni is a relatively inexpensive metal, but it is used in an electric vehicle (EV). Thus, the demand thereof has increased, the price thereof has increased, and it is becoming difficult to obtain Ni. Thus, a method for reducing a carbon oxide by which a carbon oxide such as carbon dioxide can be reduced without using a catalyst containing Ni is meaningful. In addition, as an effective measure against the global warming problem, a technique for immobilizing carbon dioxide in the atmosphere, a so-called negative emission technique, is also required as well as a technique for obtaining useful substances such as hydrocarbons using carbon dioxide as a reactant as described above. The reduction method also contributes to this negative emission technique as follows. In the reduction method, not only a carbon oxide such as carbon dioxide is reduced, but also carbon is generated through the reaction. Specifically, as described above, carbon deposits on the reduced iron used as a catalyst, or the reduced iron is carbonized (carburized). Then, steel containing the carbon is obtained by producing steel using the reduced iron on which the carbon is deposited and the carbonized reduced iron. Thus, the reduction method is also a so-called negative emission technique capable of converting at least a part of a carbon oxide such as carbon dioxide in the atmosphere into carbon and obtaining steel on which the carbon is immobilized. In this respect as well, the reduction method is meaningful.

The carbon oxide is not particularly limited as long as it is a carbon oxide containing at least one of carbon monoxide and carbon dioxide, and it may contain a carbon oxide other than carbon monoxide or carbon dioxide. The carbon oxide preferably consists of at least one of carbon monoxide and carbon dioxide. The carbon oxide is generally an inorganic compound composed only of carbon and oxygen, and examples thereof include carbon oxides in which the number of carbon atoms is equal to or less than the number of oxygen atoms, such as carbon monoxide and carbon dioxide. As long as the carbon oxide contains at least one of carbon monoxide and carbon dioxide, the carbon oxide may also contain a carbon oxide in which the number of carbon atoms is larger than the number of oxygen atoms, such as carbon suboxide (C₃O₂) and mellitic anhydride (C₁₂O₉).

The reaction furnace is not particularly limited as long as the reaction furnace can progress the chemical reaction such as the reverse shift reaction with respect to the carbon oxide introduced into the reaction furnace using the reduced iron charged into the reaction furnace as a catalyst. The reaction furnace may be, for example, a flow type or a batch type. A flow type reaction furnace (flow reactor) performs a reaction by continuously supplying reduced iron as a catalyst while maintaining the temperature and the pressure at predetermined conditions, and continuously discharges reduced iron that has been used as a catalyst (reduced iron or the like that can be used as a catalyst but has finished its role as a catalyst). The flow type reaction furnace is preferable from the viewpoint that the apparatus configuration and the operation method thereof are simple. Examples of the flow type reaction furnace include a shaft furnace, and more specifically include a shaft furnace or the like used in a MIDREX process. In a batch type reaction furnace (batch reactor), reduced iron to be a catalyst is charged into the reaction furnace, caused to react for a predetermined time while maintaining the temperature and the pressure at predetermined conditions, and then reduced iron that has been used as a catalyst (reduced iron or the like that can be used as a catalyst but has finished its role as a catalyst) is discharged. A batch type reaction furnace is preferable from the viewpoint that it is not so much necessary to contrive the gas seal or the like of the sliding portion (not so much requiring know-how) when a solid such as a catalyst that has continued to descend in the reaction furnace such as the flow type reaction furnace is constantly discharged.

The reduced iron is not particularly limited, and examples thereof include reduced iron obtained by a direct reduction method. Examples of the reduced iron obtained by the direct reduction method include direct reduced iron (DRI) such as hot direct reduced iron (HDRI), and hot briquetted iron (HBI). The direct reduced iron is iron produced by an iron making method (direct reduction method) in which iron ore, iron oxide pellets, sintered ore, and the like are directly reduced by a reducing gas produced from natural gas, coal, or the like. Examples of the iron ore include ore containing iron oxide in a produced state. Examples of the iron oxide pellets include those obtained by mixing iron ore, a binder, and water and hardening the mixture. Examples of the sintered ore include one obtained by mixing iron ore powder, carbon, and lime and hardening the mixture. Examples of the direct reduction method include the MIDREX process and the HYL process. DRI is preferable in terms of high catalytic activity. This is considered to be because of a state (sponge iron) in which a large number of pores are formed in the obtained reduced iron by oxygen escaping from the iron oxide during reduction for DRI. HBI is DRI compressed and molded (briquetted) in the heat (for example, about 700°C). HBI is more preferable than DRI in which a large number of pores are formed from the viewpoint of easy handling and suppressing heat generation and ignition (heat generation and ignition due to sponge iron).

The reduced iron preferably has a granular shape, more preferably has a spherical shape. The reduced iron preferably has an equivalent particle diameter of 5 mm or more, more preferably 8 to 18 mm, more preferably 10 to 16 mm. Here, the equivalent particle diameter is an arithmetic average value of the equivalent particle diameter in a case where the granular reduced iron is assumed to be spherical (diameter when converted into a sphere having the same volume as that of the granular reduced iron: sphere-equivalent particle diameter). When the reduced iron has a granular shape, not only the carbon oxide contained in the gas can be reduced with the hydrogen, but also the reduced iron as a catalyst can be easily exchanged. The reduced iron is often obtained in a granular shape. The reduced iron is often produced, for example, by the MIDREX process and the HYL process, but the reduced iron obtained by these processes has a granular shape, and it is also possible to obtain spherical reduced iron. In such a case, the reduced iron can be used as it is without being pulverized, and the pulverization cost and the like are not required. In addition, when the reduced iron becomes too fine because of excessive pulverization, the yield may also be reduced. When the reduced iron has a granular shape, and the reduced iron taken out from the reaction furnace is charged into, for example, a blast furnace or an electric furnace for producing steel, the reduced iron is less likely to scatter than powdery reduced iron, a decrease in yield in iron making can be suppressed, and accumulation of solid dust can also be suppressed. When the accumulation of solid dust is suppressed, the dust collection cost can also be reduced. In addition, when the reduced iron has a granular shape, and the reduced iron taken out from the reaction furnace is charged into, for example, a blast furnace, for producing steel, an increase in ventilation resistance in the blast furnace can be suppressed. A gas passage is required in the blast furnace. Thus, a molded product such as a granular product is preferable.

In the reduced iron, the total content of an iron compound, a calcium compound, a silicon compound, a magnesium compound, and an aluminum compound is preferably 90 mass% or more and preferably 95 to 100 mass% with respect to the total amount of the reduced iron. In the reduced iron, among them, the content of the iron compound is preferably 75 mass% or more, and preferably 85 to 100 mass% with respect to the total amount of the reduced iron. The iron compound is not particularly limited as long as it is a compound containing iron, and examples thereof include iron and iron oxide. The calcium compound is not particularly limited as long as it is a compound containing calcium, and examples thereof include not only calcium but also salts of calcium such as calcium chloride, calcium sulfate, calcium carbonate, and calcium oxide. The silicon compound is not particularly limited as long as it is a compound containing silicon, and examples thereof include not only silicon but also salts of silicon such as silicon dioxide and silicon hydroxide. The magnesium compound is not particularly limited as long as it is a compound containing magnesium, and examples thereof include not only magnesium but also salts of magnesium such as magnesium chloride, magnesium sulfate, magnesium carbonate, and magnesium hydroxide. The aluminum compound is not particularly limited as long as it is a compound containing aluminum, and examples thereof include not only aluminum but also aluminum salts such as aluminum chloride, aluminum sulfate, aluminum phosphate, and aluminum hydroxide. The reduced iron preferably has a metallization rate of 70% or more, more preferably 85 to 100%. The metallization rate here is a metallization rate of iron because it is reduced iron, and is a proportion (%) of metal iron contained in the reduced iron to the total iron component contained in the reduced iron [= (metal iron contained in reduced iron)/(total iron component contained in reduced iron) × 100]. When reduced iron in which the equivalent particle diameter, the total content (total content of iron compound, calcium compound, silicon compound, magnesium compound, and aluminum compound), the content of the iron compound, and the metallization rate are within the above ranges is used as the reduced iron to be charged into the reaction furnace, the carbon oxide contained in the gas can be more suitably reduced with the hydrogen. The reduced iron is preferably reduced iron reduced with a reducing gas containing 50 vol% or more of hydrogen, and more preferably reduced iron reduced with a reducing gas containing 60 vol% or more of hydrogen. The reduced iron is preferably reduced iron having a carbon content (carbon concentration) of 2.14 mass% or less. By adopting such reduced iron, the reduced iron is suitably carbonized (carburized), and the carbonized reduced iron contributes to negative emission. Thus, not only the carbon oxide contained in the gas can be more suitably reduced with the hydrogen, but also the effects of carburization and negative emission can be maximized. The reducing gas more preferably contains 67 vol% or more and 100 vol% or less hydrogen. The 2.14 mass% corresponds to the maximum carbon content in the iron alloy classified as carbon steel (steel).

As described above, the chemical reaction is not particularly limited as long as it is a reaction in which the gas introduced into the reaction furnace is used as a reactant, and the reduced iron charged into the reaction furnace is used as a catalyst. Examples of the chemical reaction include a reverse shift reaction, a methanation reaction, a Sabatier reaction, and a Fischer-Tropsch reaction.

The reverse shift reaction is a chemical reaction represented by Formula (1) shown below, in which CO can be generated from a mixed gas of CO₂ and H₂.

CO₂ + H₂ → CO + H₂O (1)

The reverse shift reaction is an endothermic reaction, and thus, the reaction easily progresses at a high temperature in equilibrium.

The methanation reaction is a chemical reaction represented by a chemical reaction represented by Formula (2) shown below, in which methane (CH₄) can be generated from a mixed gas of CO and H₂. The methanation reaction is not particularly limited as long as it is a reaction capable of producing methane (CH₄), and examples thereof include a chemical reaction represented by Formula (3) shown below in addition to the chemical reaction represented by Formula (2).

CO + 3H₂ → CH₄ + H₂O (2)

CO + 2H₂ → CH₄ + CO₂ (3)

The methanation reaction is an exothermic reaction, and thus, the methanation reaction easily progresses at a low temperature in equilibrium.

The Sabatier reaction is a chemical reaction represented by Formula (4) shown below, in which CH₄ can be generated from a mixed gas of CO₂ and H₂.

CO₂ + 4H₂ → CH₄ + 2H₂O (4)

The Sabatier reaction is an exothermic reaction, and thus, the reaction easily progresses at a low temperature in equilibrium.

The Fischer-Tropsch reaction is a chemical reaction represented by a chemical reaction represented by Formula (5) shown below and a chemical reaction represented by Formula (6) shown below, in which a hydrocarbon can be generated from a mixed gas of CO and H₂ and a mixed gas of CO₂ and H₂. The Fischer-Tropsch reaction is not particularly limited as long as it is a reaction capable of producing a hydrocarbon from the mixed gas, and the chemical reaction represented by Formula (5) and the chemical reaction represented by Formula (6) are examples. The chemical reaction represented by Formula (5) relates to a direct Fischer-Tropsch reaction among Fischer-Tropsch reactions, and the chemical reaction represented by Formula (6) relates to an indirect Fischer-Tropsch reaction among Fischer-Tropsch reactions.

nCO₂ + (3n+1)H₂ → CₙH₂ₙ₊₂ + 2nH₂O (5)

nCO + (2n+1)H₂ → CₙH₂ₙ₊₂ + nH₂O (6)

The chemical reaction may be any reaction as long as it is a reaction using the gas introduced into the reaction furnace as a reactant, and the reduced iron as a catalyst. The chemical reaction may be, for example, any reaction of a reverse shift reaction, a methanation reaction, a Sabatier reaction, and a Fischer-Tropsch reaction. Whether the reaction is a reverse shift reaction, a methanation reaction, a Sabatier reaction, a Fischer-Tropsch reaction, or the like depends on, for example, the type of the gas to be introduced into the reaction furnace, and conditions such as temperature and pressure. In addition, there is a case where not a single reaction but two or more types of reactions occur simultaneously in the reaction. That is, the chemical reaction may be one type of reaction or may be a combination of two or more types of reactions. For example, when two or more types of reactions occur simultaneously, a Sabatier reaction and a direct Fischer-Tropsch reaction may occur, or a methanation reaction and an indirect Fischer-Tropsch reaction may occur.

The gas to be introduced into the reaction furnace is not particularly limited as long as it is a gas containing the carbon oxide and the hydrogen. The hydrogen, the carbon dioxide, and the carbon monoxide are used as reactants for a reverse shift reaction, a methanation reaction, a Sabatier reaction, and a Fischer-Tropsch reaction. Thus, it is preferable that the hydrogen, the carbon dioxide, and the carbon monoxide occupy a high proportion of the gas. Specifically, as the gas, the total volume of the hydrogen, the carbon dioxide, and the carbon monoxide is preferably 75 vol% or more, more preferably 85 to 100 vol% with respect to the total volume of the gas. In all of the reverse shift reaction, the methanation reaction, the Sabatier reaction, and the Fischer-Tropsch reaction, water (H₂O) inhibits the progress of the reaction, and thus it is preferable that the amount of water is small. Specifically, as the gas, the total volume of the hydrogen and the carbon monoxide is preferably 3 times or more, more preferably 3 to 20 times, still more preferably 4 to 15 times the total volume of water and the carbon dioxide. When the gas having the composition is used as the gas to be introduced into the reaction furnace, the carbon oxide contained in the gas can be more suitably reduced with the hydrogen. In addition, it is preferable that the gas to be introduced into the reaction furnace does not contain a sulfur compound from the viewpoint of reducing poisoning by the sulfur compound and from the viewpoint of improving the quality of steel obtained when the reduced iron used in the reaction is used for iron making, and even when a sulfur compound is contained, it is preferable that the content thereof is small. The content of the sulfur compound is, for example, preferably 10 ppm or less (that is, 0 to 10 ppm), more preferably 1 ppm or less (that is, 0 to 1 ppm) with respect to the gas. Examples of the sulfur compound include sulfur oxides such as sulfur dioxide, and hydrogen sulfide.

In the reaction furnace at the time of performing the chemical reaction, conditions such as temperature and pressure in the reaction furnace are not particularly limited as long as the reaction progresses. In the reduction method, it is not necessary to perform a mild reaction in which carbon does not deposit, but it is preferable that the reduction method is under a condition in which the reaction rate can be increased because reduced iron can be effectively utilized for iron making when carbon deposits. The temperature in the reaction furnace is, for example, preferably 300 to 900°C, more preferably 400 to 900°C. The pressure in the reaction furnace is, for example, preferably atmospheric pressure (about 101.325 kPaA) or more, and preferably 300 to 5100 kPaA or more.

In the reduction method, when a product gas containing carbon monoxide is obtained by reducing the carbon oxide, the carbon monoxide may be separated from the product gas containing carbon monoxide, and the separated carbon monoxide may be introduced into the reaction furnace. Through this procedure, the reduction of the carbon oxide contained in the gas with the hydrogen can be more efficiently performed, and a hydrocarbon such as methane can be efficiently obtained.

In the reduction method, it is preferable that all of the hydrogen and the carbon dioxide are used after the gas introduced into the reaction furnace is subjected to the chemical reaction, but the product gas obtained after the chemical reaction may contain the hydrogen not used in the chemical reaction and the carbon dioxide not used in the chemical reaction. In such a case, the hydrogen not used in the chemical reaction and the carbon dioxide not used in the chemical reaction may be separated from the product gas obtained after the chemical reaction is performed, and the separated hydrogen and carbon dioxide may be introduced into the reaction furnace. Through this procedure, hydrogen and carbon dioxide not used in the chemical reaction can be reused, and the yields such as the conversion rate from hydrogen and the conversion rate from carbon dioxide can be increased. Thus, the reduction of the carbon oxide contained in the gas with the hydrogen can be more efficiently performed.

In the reduction method, when the chemical reaction such as the reverse shift reaction with respect to the carbon oxide introduced into the reaction furnace progresses using the reduced iron charged into the reaction furnace as a catalyst, carbon deposits on the reduced iron used as the catalyst by the following reaction or the like. Examples of the carbon include free carbon (amorphous carbon), graphite (crystalline carbon), soot (solid polymer component), and tar (semi-liquid polymer component). Then, at least a part of the reduced iron on which carbon is deposited is usually carbonized by the carbon through reactions or the like represented by Formulas (7) and (8). That is, the reduced iron becomes a metal carbide in which a metal such as iron constituting reduced iron is bound to the carbon. Carbide (Fe₃C) is generally called cementite. Metal iron (Fe) has higher catalytic activity than cementite (Fe₃C).

3Fe + C → Fe₃C (7)

3Fe + 2CO → Fe₃C + CO₂ (8)

Carbon to be deposited on the reduced iron is generated when conditions at the time of reaction such as temperature, pressure, and composition satisfy predetermined conditions in the reduction method. Specifically, the conditions cause a relatively intense reaction in which a hydrocarbon decomposition reaction such as a Boudouard reaction represented by Formula (9) shown below, a reaction represented by Formula (10) shown below, and a methane cracking reaction represented by Formula (11) shown below progresses.

2CO → C + CO₂ (9)

CO + H₂ → C + H₂O (10)

CH₄ → C + 2H₂ (11)

Once carbon deposits, the catalytic activity decreases. Thus, when a rare metal or the like is used as a catalyst, the conditions (temperature, pressure, and composition) are usually adjusted such that a mild (that is, the reaction rate of the carbon deposition reaction is extremely slow) reaction occurs without carbon deposition. However, under the conditions that the reaction does not cause carbon deposition, the reaction rate of the reduction reaction (hydrocarbon synthesis reaction) of the carbon oxide (CO₂ or the like) is also usually slow. Thus, to obtain a predetermined reaction rate, it is necessary to increase the size of the reaction furnace and to increase the amount of catalyst filled therein, which leads to an increase in cost. In the method for reducing a carbon oxide according to the present embodiment, it is not necessary to use a catalyst containing costly materials such as Ni, Co, and noble metals as a catalyst. In addition, carbon is deposited on the reduced iron used as a catalyst in the reduction method, or the reduced iron is carbonized, and thus, the carbon oxide introduced into the reaction furnace can be immobilized on the reduced iron as carbon. By using the reduced iron on which carbon is immobilized like this (reduced iron on which carbon is deposited or carbonized reduced iron) at the time of producing steel, the amount of carbon to be supplied at the time of producing steel can be reduced. Thus, for these reasons and the like, the reduced iron used in the reduction method can be effectively used for producing steel. From these, reduced iron as a catalyst can be exchanged at high frequency, and thus, it is not necessary to perform a mild reaction in which carbon does not deposit. Further, steel containing carbon is obtained by producing steel using the reduced iron on which carbon is immobilized. From this, in the reduction method, at least part of carbon oxides such as carbon dioxide in the atmosphere can be converted to carbon, and steel in which the carbon is immobilized can be obtained. That is, the reduction method can also realize so-called negative emission in which carbon dioxide is not discharged but absorbed.

To effectively utilize the reduced iron on which carbon is deposited or carbonized reduced iron, the reduction method may be, for example, the following method. First, when a predetermined time elapses from when the reduced iron is charged into the reaction furnace, the reduced iron is taken out from the reaction furnace. Specifically, the time after the reduced iron is charged into the reaction furnace is measured, and when a predetermined time has passed as the measured time, the reduced iron is taken out from the reaction furnace. Then, reduced iron (new reduced iron) not used as a catalyst is charged into the reaction furnace. Through this procedure, new reduced iron that is not used as a catalyst can be charged before the catalytic activity of the reduced iron charged into the reaction furnace excessively decreases, and thus, the reduced iron charged into the reaction furnace can maintain a high catalytic activity state. When the reduced iron is used as a catalyst, sintering, poisoning by impurities such as sulfur compounds, and the like may occur, but even when these occur, a high catalytic activity state can be maintained by making the exchange frequency of the reduced iron higher than the exchange frequency of a normal catalyst. Thus, the reduction of the carbon oxide contained in the gas with the hydrogen can be more efficiently performed. In addition, as described above carbon is deposited on the reduced iron obtained after a predetermined time has elapsed from when the reduced iron is charged into the reaction furnace, the reduced iron is carbonized, and thus, the reduced iron can be effectively used in the production of steel, and for example, the amount of carbon to be supplied at the time of producing steel can be reduced. The predetermined time after the reduced iron is charged into the reaction furnace is much shorter than the time (usually 1 year or more) with the catalyst used by adjusting the conditions to produce a mild reaction in which carbon does not deposit. The predetermined time may be any time as long as the catalytic activity of the reduced iron does not excessively decrease, and may be, for example, a time until the reaction rate decreases to 70% of the reaction rate of the initial stage of the reaction. The reaction rate can be measured by a known method, and can be calculated, for example, from a measured value using a gas analyzer such as Fourier transform infrared spectroscopy (FT-IR) and gas chromatography (gas chromatography-mass spectrometry or the like). The predetermined time is, for example, preferably 30 minutes to 1 month, more preferably 30 minutes to 1 week, still more preferably 30 minutes to 3 days. Specific examples of the predetermined time include 3 days, 1 week, and 1 month.

The reduced iron taken out from the reaction furnace can be effectively used at the time of producing steel. Specifically, a method for producing steel according to another embodiment of the present invention is a method for producing steel, the method including introducing a gas containing hydrogen and a carbon oxide containing at least one of carbon monoxide and carbon dioxide into a reaction furnace, charging reduced iron into the reaction furnace, reducing the carbon oxide through the chemical reaction, such as a reverse shift reaction, a methanation reaction, a Sabatier reaction, or a Fischer-Tropsch reaction, using the gas introduced into the reaction furnace as a reactant and the reduced iron as a catalyst, taking out the reduced iron from the reaction furnace when a predetermined time elapses from when the reduced iron is charged into the reaction furnace, and charging the reduced iron taken out from the reaction furnace into a blast furnace or an electric furnace. Through this procedure, the reduced iron taken out from the reaction furnace can be effectively used as a raw material in producing steel. In addition, when the reduced iron taken out from the reaction furnace is charged into a blast furnace at the time of producing steel, the amount of carbon (coke) to be separately supplied at the time of producing steel can be reduced because carbon is deposited on the reduced iron taken out from the reaction furnace, or the reduced iron is carbonized. In addition, the reduced iron taken out from the reaction furnace can be used as a reducing agent in the blast furnace, which can improve energy efficiency and can reduce running cost. In addition, when the reduced iron taken out from the reaction furnace is charged into an electric furnace, the reduced iron can be used as a heating agent or a carburizing material, which can improve energy efficiency and can reduce running cost. Further, steel containing carbon is obtained by producing steel using the reduced iron on which carbon is immobilized, and thus, at least part of carbon oxides such as carbon dioxide in the atmosphere can be converted into carbon by the method for producing steel, and steel on which carbon is immobilized can be obtained. That is, the reduction method can also realize so-called negative emission in which carbon dioxide is not discharged but absorbed. At the time of producing steel, in addition to the reduced iron taken out from the reaction furnace, unreduced iron, reduced iron not used as a catalyst, or the like may be used, but only the reduced iron taken out from the reaction furnace may be used as an iron source without using these. Negative emission can be further realized by using only the reduced iron taken out from the reaction furnace as an iron source like this. The method for producing steel may be any known method for producing steel except that the reduced iron taken out from the reaction furnace is contained in the iron source to be charged into the blast furnace or the electric furnace.

The apparatus for performing the reduction method (apparatus for reducing a carbon oxide) is not particularly limited as long as the reduction method can be performed. Examples of the reducing apparatus include an apparatus for reducing a carbon oxide, the apparatus including a reaction furnace, an inflow unit that introduces a gas containing hydrogen and a carbon oxide containing at least one of carbon monoxide and carbon dioxide into the reaction furnace, and a charging unit that charges reduced iron into the reaction furnace, in which the carbon oxide is reduced through the chemical reaction, such as a reverse shift reaction, a methanation reaction, a Sabatier reaction, or a Fischer-Tropsch reaction, using the gas introduced into the reaction furnace at the inflow unit as a reactant and the reduced iron as a catalyst. Such a reducing apparatus can perform the reduction method, and thus, it is possible to reduce a carbon oxide such as carbon dioxide without using a catalyst containing costly materials such as Ni, Co, and noble metals as in the reduction method. Also in the reducing apparatus, similarly to the reduction method, the reduced iron taken out from the reaction furnace can be effectively used at the time of producing steel. The reducing apparatus may be an apparatus (apparatus for producing steel) that produces steel using the reduced iron at the time of producing steel in this manner. Specifically, an apparatus for producing steel according to another embodiment of the present invention is an apparatus for producing steel, the apparatus including a reaction furnace, an inflow unit that introduces a gas containing hydrogen and a carbon oxide containing at least one of carbon monoxide and carbon dioxide into the reaction furnace, a charging unit that charges reduced iron into the reaction furnace, a discharge unit that takes out the reduced iron from the reaction furnace when a predetermined time elapses from when the reduced iron is charged into the reaction furnace at the charging unit, and an iron supply unit that charges the reduced iron taken out from the reaction furnace at the discharge unit into a blast furnace or an electric furnace, in which in the reaction furnace, the carbon oxide is reduced through a chemical reaction using the gas introduced into the reaction furnace as a reactant and the reduced iron as a catalyst.

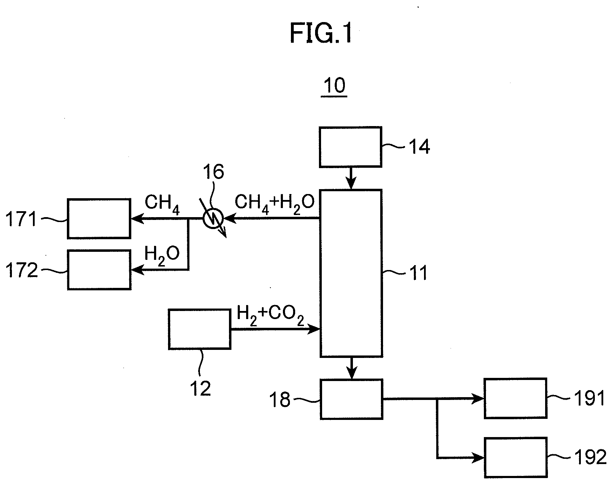

Examples of the reducing apparatus include an apparatus that causes a Sabatier reaction. Specific examples of the reducing apparatus include a reducing apparatus 10 illustrated in FIG. 1. FIG. 1 is a schematic configuration diagram illustrating an example of an apparatus for reducing a carbon oxide according to the present embodiment. As illustrated in FIG. 1, the reducing apparatus 10 includes a reaction furnace 11, an inflow unit 12, and a charging unit 14. The reducing apparatus 10 is an apparatus that supplies a gas containing carbon dioxide and hydrogen from the inflow unit 12 to the reaction furnace 11, and causes a Sabatier reaction using the reduced iron charged into the reaction furnace 11 from the charging unit 14 as a catalyst to obtain methane. The gas obtained in the reaction furnace 11 mainly contains water (water vapor) in a gas phase state in addition to methane. After the gas is taken out from the reaction furnace 11, the gas is cooled by a heat exchanger 16 provided in the reducing apparatus 10 to be separated into methane and water. The gas taken out from the reaction furnace 11 can also contain hydrogen and carbon dioxide that remain unreacted in the reaction furnace 11. However, in FIG. 1, as the gas taken out from the reaction furnace 11, the notations of unreacted hydrogen and carbon dioxide that can be contained are omitted, and methane and water (water vapor) mainly constituting the gas are denoted. The separated methane is recovered in a methane recovery unit 171 provided in the reducing apparatus 10, and the separated water is recovered in a water recovery unit 172 provided in the reducing apparatus 10 separately from the separated methane. The reducing apparatus 10 takes out the reduced iron used as a catalyst in the reaction furnace 11 in a discharge unit 18. Specifically, as described above, the time from when the reduced iron is charged into the reaction furnace 11 is measured, and when a predetermined time has elapsed from when the reduced iron is charged into the reaction furnace, the reduced iron is taken out from the reaction furnace 11 at the discharge unit 18. As described above, carbon is deposited on the reduced iron taken out in the discharge unit 18, or the reduced iron is carbonized, and the reduced iron is charged into a blast furnace 191 or an electric furnace 192 and used for iron making. After the reduced iron taken out from the reaction furnace 11 or an iron source containing the reduced iron is charged into the blast furnace 191 or the electric furnace 192, the apparatus for producing steel may be similar to a known apparatus for producing steel, and steel can be produced with this apparatus for producing steel. Thus, the reducing apparatus 10 is also an apparatus for producing steel. That is, the apparatus for producing steel may be any known apparatus for producing steel except that the reduced iron taken out at the discharge unit 18 is contained in the iron source to be charged into the blast furnace 191 or the electric furnace 192. The apparatus for producing steel includes a means for charging the reduced iron taken out from the reaction furnace 11 in the discharge unit 18 into the blast furnace 191 or the electric furnace 192, and this means corresponds to an iron supply unit.

The charging of the reduced iron from the charging unit 14 into the reaction furnace 11 in the reducing apparatus 10 is not particularly limited, but the reduced iron may be charged as follows, for example. For example, a valve is provided in each of an upper part (the charging unit 14 side) and a lower part (the discharge unit 18 side) of the reaction furnace 11, and first, only the valve in the lower part is closed, and the reduced iron (reduced iron before being used as a catalyst) is charged into the reaction furnace 11 from the upper part. Thereafter, the valve on the upper part is closed, a gas containing carbon dioxide and hydrogen is introduced into the reaction furnace 11 from the inflow unit 12, and reduced iron in the reaction furnace 11 is caused to react as a catalyst. After a predetermined time elapses, the valve on the lower part is opened, and the reduced iron is taken out from the reaction furnace 11. Thereafter, the valve on the upper part is opened, the valve on the lower part is closed, and the above operation is repeated from the charging of the reduced iron (reduced iron before being used as a catalyst). As another example, a plurality (two or more) of the reaction furnaces may be connected in parallel to the reducing apparatus. In such a case, for example, while reduced iron (reduced iron before being used as a catalyst) is charged into some reaction furnaces (reaction furnaces constituting a first reaction furnace group) among a plurality of the reaction furnaces, the reaction may be performed in the remaining reaction furnaces (reaction furnaces constituting a second reaction furnace group), and then the reaction may be performed in the reaction furnaces constituting the first reaction furnace group while the reduced iron used as a catalyst is taken out and the reduced iron (reduced iron before being used as a catalyst) is charged into the reaction furnaces constituting the second reaction furnace group. Some of the reaction furnaces constituting the first reaction furnace group may be changed to the second reaction furnace group, or some of the reaction furnaces constituting the second reaction furnace group may be changed to the first reaction furnace group. A state in which some of the reaction furnaces constituting the first reaction furnace group are not used can be made, or a state in which some of the reaction furnaces constituting the second reaction furnace group are not used can be made. When the two reaction furnaces are connected in parallel to the reducing apparatus, for example, while the reduced iron (reduced iron before being used as a catalyst) is charged into one reaction furnace, the reaction may be performed in the other reaction furnace, and then the reaction may be performed in one reaction furnace while the reduced iron used as a catalyst is taken out and the reduced iron (reduced iron before being used as a catalyst) is charged into the other reaction furnace. In addition, in the reduction method, as described above, it is preferable that the reduced iron is taken out and charged at high frequency. As described above, the reaction furnace may be a flow type reaction furnace or a batch type reaction furnace, and in the case of these reaction furnaces, it is easy to take out and charge reduced iron at high frequency.

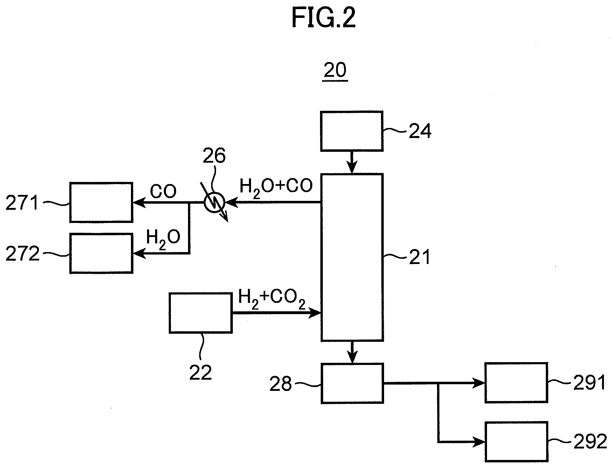

Examples of the reducing apparatus include an apparatus that causes a reverse shift reaction. As another example of the reducing apparatus, specifically, a reducing apparatus 20 illustrated in FIG. 2 and the like can be exemplified. FIG. 2 is a schematic configuration diagram illustrating another example of the apparatus for reducing a carbon oxide according to the present embodiment. The reducing apparatus 20 is the same as the reducing apparatus 10 except that a reverse shift reaction is caused instead of the Sabatier reaction. As illustrated in FIG. 2, the reducing apparatus 20 includes a reaction furnace 21, an inflow unit 22, and a charging unit 24. The reducing apparatus 20 is an apparatus that supplies a gas containing carbon dioxide and hydrogen from the inflow unit 22 to the reaction furnace 21, and causes a reverse shift reaction using the reduced iron charged into the reaction furnace 21 from the charging unit 24 as a catalyst to obtain carbon monoxide. The gas obtained in the reaction furnace 21 mainly contains water (water vapor) in a gas phase state in addition to carbon monoxide. After the gas is taken out from the reaction furnace 21, the gas is cooled by a heat exchanger 26 provided in the reducing apparatus 20 to be separated into carbon monoxide and water. The gas taken out from the reaction furnace 21 can also contain hydrogen and carbon dioxide that remain unreacted in the reaction furnace 21. However, in FIG. 2, as the gas taken out from the reaction furnace 21, the notations of unreacted hydrogen and carbon dioxide that may be contained are omitted, and carbon monoxide and water (water vapor) mainly constituting the gas are denoted. The separated carbon monoxide is recovered in a carbon monoxide recovery unit 271 provided in the reducing apparatus 20, and the separated water is recovered in a water recovery unit 272 provided in the reducing apparatus 20 separately from the separated carbon monoxide. The reducing apparatus 20 takes out the reduced iron used as a catalyst in the reaction furnace 21 to a discharge unit 28. As described above, carbon is deposited on the reduced iron taken out by the discharge unit 28, or the reduced iron is carbonized, and the reduced iron is charged into a blast furnace 291 or an electric furnace 292 and used for iron making, and thus steel can be produced.

The reducing apparatus may be, for example, an apparatus including two or more reaction furnaces. Specifically, examples of the reducing apparatus include an apparatus including a reaction furnace that causes a reverse shift reaction and a reaction furnace that causes a methanation reaction. Specific examples of the apparatus including two or more reaction furnaces include a case where two reaction furnaces are used, reduced iron is put into each of the reaction furnaces, and carbonized reduced iron is taken out from both the reaction furnaces (parallel), and a case where two reaction furnaces are used, reduced iron is put into one reaction furnace, and carbonized reduced iron taken out from the one reaction furnace is put into the other reaction furnace (series).

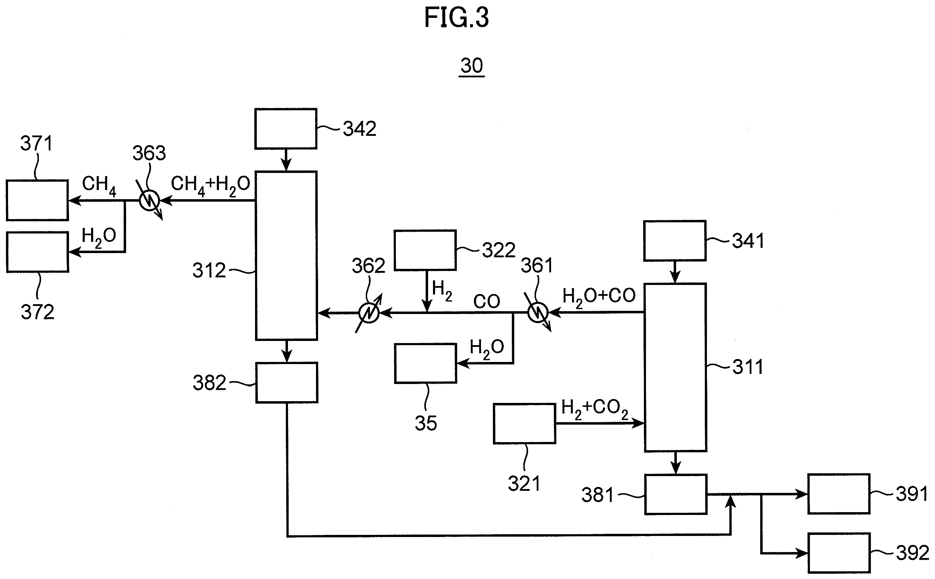

As another example of the reducing apparatus, for example, in the case of the parallel arrangement, specifically, a reducing apparatus 30 or the like illustrated in FIG. 3 can be exemplified. FIG. 3 is a schematic configuration diagram illustrating another example of the apparatus for reducing a carbon oxide according to the present embodiment. As illustrated in FIG. 3, the reducing apparatus 30 includes a first reaction furnace 311, a first inflow unit 321, a first charging unit 341, a second reaction furnace 312, a second inflow unit 322, and a second charging unit 342. The reducing apparatus 30 supplies a gas containing carbon dioxide and hydrogen from the first inflow unit 321 to the first reaction furnace 311, and causes a reverse shift reaction using the reduced iron charged into the first reaction furnace 311 from the first charging unit 341 as a catalyst to obtain carbon monoxide. The gas taken out from the first reaction furnace 311 can also include hydrogen and carbon dioxide that remain unreacted in the first reaction furnace 311. However, in FIG. 3, as the gas taken out from the first reaction furnace 311, the notations of unreacted hydrogen and carbon dioxide that may be contained are omitted, and carbon monoxide and water (water vapor) mainly constituting the gas are denoted. Water associated with carbon monoxide obtained in the reverse shift reaction in the first reaction furnace 311 may be removed because of circumstances such as a circumstance in which the amount of water (water vapor) associated with carbon monoxide is large. Specifically, carbon monoxide and water may be separated by taking out the carbon monoxide from the first reaction furnace 311 and then cooling the carbon monoxide with a heat exchanger 361 provided in the reducing apparatus 30. When water is separated in this manner, the separated water is recovered in the water recovery unit 35. Thus, the reducing apparatus 30 may or may not include the heat exchanger 361, and when the heat exchanger 361 is not included, the water recovery unit 35 does not have to be included. Hydrogen is supplied from the second inflow unit 322 to carbon monoxide (when water is separated, carbon monoxide from which water has been separated) obtained in the reverse shift reaction. The reducing apparatus 30 supplies the carbon monoxide supplied with the hydrogen to the second reaction furnace 312, and causes a methanation reaction using the reduced iron charged from the second charging unit 342 into the second reaction furnace 312 as a catalyst to obtain methane. The gas taken out from the second reaction furnace 312 can also include hydrogen and carbon dioxide that remain unreacted in the second reaction furnace 312. However, in FIG. 3, as the gas taken out from the second reaction furnace 312, the notations of unreacted hydrogen and carbon dioxide that can be contained are omitted, and methane and water (water vapor) mainly constituting the gas are denoted. The gas containing carbon monoxide and hydrogen and supplied to the second reaction furnace 312 may be heated by the heat exchanger 362 provided in the reducing apparatus 30 to increase reaction efficiency. The gas obtained in the second reaction furnace 312 mainly contains water (water vapor) in a gas phase state in addition to methane, and the gas is separated into the methane and water by taking out the methane from the second reaction furnace 312 and then cooling the methane with a heat exchanger 363 provided in the reducing apparatus 30. The separated methane is recovered in a methane recovery unit 371 provided in the reducing apparatus 30, and the separated water is recovered in a water recovery unit 372 provided in the reducing apparatus 30 separately from the separated methane. In the reducing apparatus 30, the reduced iron used as a catalyst in the first reaction furnace 311 is taken out in the first discharge unit 381, and the reduced iron used as a catalyst in the second reaction furnace 312 is taken out in the second discharge unit 382. As described above, carbon is deposited on the reduced iron taken out in the first discharge unit 381 and the second discharge unit 382, or the reduced iron is carbonized, and the reduced iron is charged into a blast furnace 391 or an electric furnace 392 and used for iron making, and thus steel can be produced.

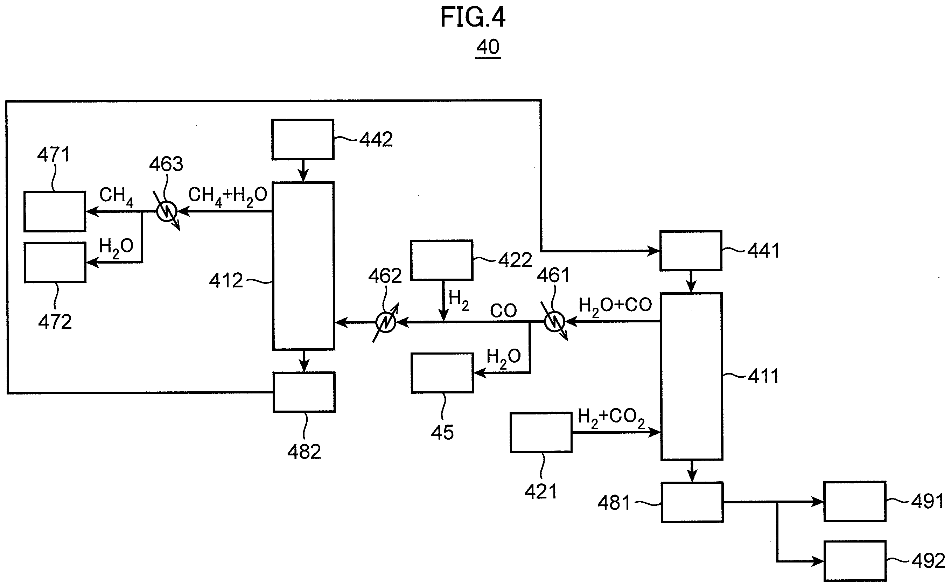

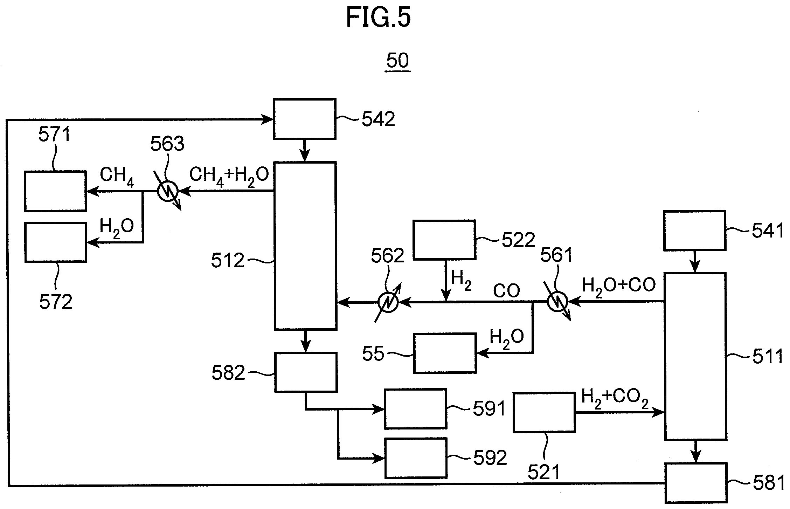

As another example of the reducing apparatus, for example, in the case of the series connection, specifically, a reducing apparatus 40 illustrated in FIG. 4, a reducing apparatus 50 illustrated in FIG. 5, and the like can be exemplified. FIGS. 4 and 5 are schematic configuration diagrams each illustrating another example of the apparatus for reducing a carbon oxide according to the present embodiment.

As illustrated in FIG. 4, the reducing apparatus 40 includes a first reaction furnace 411, a first inflow unit 421, a first charging unit 441, a second reaction furnace 412, a second inflow unit 422, and a second charging unit 442. The reducing apparatus 40 supplies a gas containing carbon dioxide and hydrogen from the first inflow unit 421 to the first reaction furnace 411, charges reduced iron taken out from the second reaction furnace 412 into the first reaction furnace 411 at the first charging unit 441, and causes a reverse shift reaction using the reduced iron as a catalyst to obtain carbon monoxide. The gas taken out from the first reaction furnace 411 can also include hydrogen and carbon dioxide that remain unreacted in the first reaction furnace 411. However, in FIG. 4, as the gas taken out from the first reaction furnace 411, the notations of unreacted hydrogen and carbon dioxide that may be contained are omitted, and carbon monoxide and water (water vapor) mainly constituting the gas are denoted. Water associated with carbon monoxide obtained in the reverse shift reaction in the first reaction furnace 411 may be removed because of circumstances such as a circumstance in which the amount of water (water vapor) associated with carbon monoxide is large. Specifically, carbon monoxide and water may be separated by taking out the carbon monoxide (including water associated with the carbon monoxide) from the first reaction furnace 411 and then cooling the carbon monoxide with a heat exchanger 461 provided in the reducing apparatus 40. When water is separated in this manner, the separated water is recovered by the water recovery unit 45. Thus, the reducing apparatus 40 may or may not include the heat exchanger 461, and when the heat exchanger 461 is not included, the water recovery unit 45 does not have to be included. Hydrogen is supplied from the second inflow unit 422 to carbon monoxide (when water is separated, carbon monoxide from which water has been separated) obtained in the reverse shift reaction. The reducing apparatus 40 supplies the carbon monoxide supplied with the hydrogen to the second reaction furnace 412, and causes a methanation reaction using the reduced iron charged from the second charging unit 442 into the second reaction furnace 412 as a catalyst to obtain methane. The gas taken out from the second reaction furnace 412 can also include hydrogen and carbon dioxide that remain unreacted in the second reaction furnace 412. However, in FIG. 4, as the gas taken out from the second reaction furnace 412, the notations of unreacted hydrogen and carbon dioxide that can be contained are omitted, and methane and water (water vapor) mainly constituting the gas are denoted. The gas containing carbon monoxide and hydrogen and supplied to the second reaction furnace 412 may be heated by the heat exchanger 462 provided in the reducing apparatus 40 to increase reaction efficiency. The gas obtained in the second reaction furnace 412 mainly contains water (water vapor) in a gas phase state in addition to methane, and the gas is separated into the methane and water by taking out the methane from the second reaction furnace 412 and then cooling the gas with a heat exchanger 463 provided in the reducing apparatus 40. The separated methane is recovered in a methane recovery unit 471 provided in the reducing apparatus 40, and the separated water is recovered in a water recovery unit 472 provided in the reducing apparatus 40 separately from the separated methane. In the reducing apparatus 40, the reduced iron used as a catalyst in the second reaction furnace 412 is taken out in the second discharge unit 482. The reduced iron taken out in the second discharge unit 482 is charged into the first reaction furnace 411 at the first charging unit 441 as described above. In the reducing apparatus 40, the reduced iron used as a catalyst in the first reaction furnace 411 is taken out in the first discharge unit 481. As described above, carbon is deposited on the reduced iron taken out in the first discharge unit 481, or the reduced iron is carbonized, and the reduced iron is charged into a blast furnace 491 or an electric furnace 492 and used for iron making, and thus steel can be produced.

As illustrated in FIG. 5, the reducing apparatus 50 includes a first reaction furnace 511, a first inflow unit 521, a first charging unit 541, a second reaction furnace 512, a second inflow unit 522, and a second charging unit 542. The reducing apparatus 50 supplies a gas containing carbon dioxide and hydrogen from the first inflow unit 521 to the first reaction furnace 511, and causes a reverse shift reaction using the reduced iron charged into the first reaction furnace 511 from the first charging unit 541 as a catalyst to obtain carbon monoxide. The gas taken out from the first reaction furnace 511 can also include hydrogen and carbon dioxide that remain unreacted in the first reaction furnace 511. However, in FIG. 5, as the gas taken out from the first reaction furnace 511, the notations of unreacted hydrogen and carbon dioxide that may be contained are omitted, and carbon monoxide and water (water vapor) mainly constituting the gas are denoted. Water associated with carbon monoxide obtained in the reverse shift reaction in the first reaction furnace 511 may be removed because of circumstances such as a circumstance in which the amount of water (water vapor) associated with carbon monoxide is large. Specifically, the gas may be separated into carbon monoxide and water by taking out the carbon monoxide from the first reaction furnace 511 and then cooling the carbon monoxide with a heat exchanger 561 provided in the reducing apparatus 50. When water is separated in this manner, the separated water is recovered in the water recovery unit 55. Hydrogen is supplied from the second inflow unit 522 to the carbon monoxide from which water has been separated. Thus, the reducing apparatus 50 may or may not include the heat exchanger 561, and when the heat exchanger 561 is not included, the water recovery unit 55 does not have to be included. Hydrogen is supplied from the second inflow unit 522 to carbon monoxide (when water is separated, carbon monoxide from which water has been separated) obtained in the reverse shift reaction. The reducing apparatus 50 supplies the carbon monoxide supplied with the hydrogen to the second reaction furnace 512, and the reduced iron taken out from the first reaction furnace 511 is charged into the second reaction furnace 512 at the second charging unit 542, and a methanation reaction is caused using the reduced iron as a catalyst to obtain methane. The gas taken out from the second reaction furnace 512 can also include hydrogen and carbon dioxide that remain unreacted in the second reaction furnace 512. However, in FIG. 5, as the gas taken out from the second reaction furnace 512, the notations of unreacted hydrogen and carbon dioxide that can be contained are omitted, and methane and water (water vapor) mainly constituting the gas are denoted. The gas containing carbon monoxide and hydrogen and supplied to the second reaction furnace 512 may be heated by the heat exchanger 562 provided in the reducing apparatus 50 to increase reaction efficiency. The gas obtained in the second reaction furnace 512 mainly contains water (water vapor) in a gas phase state in addition to methane, and the gas is separated into the methane and water by taking out the methane from the second reaction furnace 512 and then cooling the gas with a heat exchanger 563 provided in the reducing apparatus 50. The separated methane is recovered by a methane recovery unit 571 provided in the reducing apparatus 50, and the separated water is recovered by a water recovery unit 572 provided in the reducing apparatus 50 separately from the separated methane. In the reducing apparatus 50, the reduced iron used as a catalyst in the first reaction furnace 511 is taken out in the first discharge unit 581. The reduced iron taken out in the first discharge unit 581 is charged into the second reaction furnace 512 at the second charging unit 542 as described above. In the reducing apparatus 50, the reduced iron used as a catalyst in the second reaction furnace 512 is taken out in the second discharge unit 582. As described above, carbon is deposited on the reduced iron taken out at the second discharge unit 582, or the reduced iron is carbonized, and the reduced iron is charged into a blast furnace 591 or an electric furnace 592 and used for iron making, and thus steel can be produced.

As in the reducing apparatus 30, the reducing apparatus 40, and the reducing apparatus 50, when two reaction furnaces are used and a reverse shift reaction is caused to occur in one reaction furnace, and a methanation reaction is caused to occur in the other reaction furnace, as described above, after water associated with the carbon monoxide is removed from the carbon monoxide generated in the reverse shift reaction, the carbon monoxide from which the water has been removed can be used for the methanation reaction. In the methanation reaction, water becomes a substance that inhibits the reaction, and thus, in the reducing apparatus 30, the yield of methane can be increased. In the reverse shift reaction, the yield of methane can also be increased by increasing the H₂/CO₂ ratio.

As in the reducing apparatus 40 and the reducing apparatus 50, when two reaction furnaces are used, reduced iron is placed in one reaction furnace, and the carbonized reduced iron taken out from the one reaction furnace is placed in the other reaction furnace (series), the reduced iron is carbonized in two stages, and thus, the content of Fe₃C in the taken out reduced iron is higher than that in parallel. Thus, when the taken-out reduced iron is used for iron making, the running cost in the blast furnace or the electric furnace in the subsequent stage is reduced. On the other hand, in series, the content of Fe₃C in the reduced iron charged into the reaction furnace increases faster than in parallel, and thus, the catalytic activity decreases quickly, and it is necessary to enlarge the reaction furnace. Thus, the cost for the reaction furnace at the time of synthesis increases.

As in the reducing apparatus 30, when two reaction furnaces are used, reduced iron is put into each of the reaction furnaces, and the carbonized reduced iron is extracted from both the reaction furnaces (parallel), and the content of Fe₃C in the taken-out reduced iron is lower than that in series. Thus, even when the taken-out reduced iron is used for iron making, the effect of reducing the running cost in the blast furnace or the electric furnace in the subsequent stage is insufficient. On the other hand, in parallel, the content of Fe₃C in the reduced iron charged into the reaction furnace increases more slowly than in series, and thus, the decrease in the catalytic activity is suppressed, and the reaction furnace can be made smaller. Thus, the cost for the reaction furnace at the time of synthesis decreases.

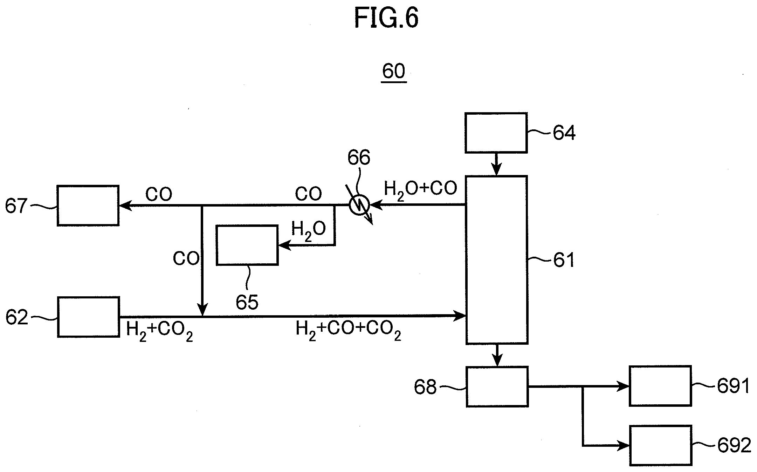

In the reducing apparatus, carbon monoxide or the like separated from a product gas obtained by causing the gas containing carbon oxide to react may be introduced into the reaction furnace and used for the reaction. For example, when a product gas containing carbon monoxide is obtained by reducing the carbon oxide, the carbon monoxide may be separated from the product gas containing carbon monoxide, and the separated carbon monoxide may be introduced into the reaction furnace. Through this procedure, the reduction of the carbon oxide contained in the gas with the hydrogen can be more efficiently performed, and a hydrocarbon such as methane can be efficiently obtained. As an example of such a reducing apparatus, specifically, a reducing apparatus 60 or the like illustrated in FIG. 6 can be exemplified. FIG. 6 is a schematic configuration diagram illustrating another example of the apparatus for reducing a carbon oxide according to the present embodiment.

As illustrated in FIG. 6, the reducing apparatus 60 includes a reaction furnace 61, an inflow unit 62, and a charging unit 64. The reducing apparatus 60 is an apparatus that supplies a gas containing carbon dioxide and hydrogen from the inflow unit 62 to the reaction furnace 61, and causes a reverse shift reaction using the reduced iron charged into the reaction furnace 61 from the charging unit 64 as a catalyst to obtain carbon monoxide. The gas taken out from the reaction furnace 61 can also contain hydrogen and carbon dioxide that remain unreacted in the reaction furnace 61. However, in FIG. 6, as the gas taken out from the reaction furnace 61, the notations of unreacted hydrogen and carbon dioxide that may be contained are omitted, and carbon monoxide and water (water vapor) mainly constituting the gas are denoted. The gas obtained in the reaction furnace 61 mainly contains water (water vapor) in a gas phase state in addition to carbon monoxide. After the carbon monoxide is taken out from the reaction furnace 61, the gas is cooled by a heat exchanger 66 provided in the reducing apparatus 60 to be separated into carbon monoxide and water. The separated water is recovered in a water recovery unit 65 provided in reducing apparatus 60 separately from the separated carbon monoxide. At least a part of the separated carbon monoxide is introduced into the gas containing carbon dioxide and hydrogen from the inflow unit 62. Thus, the gas to be introduced into the reaction furnace 61 is the gas obtained by adding the separated carbon monoxide to the gas supplied from the inflow unit 62. Among the separated carbon monoxide, carbon monoxide that is not returned to the reaction furnace 61 is recovered in a carbon monoxide recovery unit 67 provided in the reducing apparatus 60, and the reducing apparatus 60 takes out the reduced iron used as a catalyst in the reaction furnace 61 to a discharge unit 68. As described above, carbon is deposited on the reduced iron taken out in the discharge unit 68, or the reduced iron is carbonized, and the reduced iron is charged into a blast furnace 691 or an electric furnace 692 and used for iron making, and thus steel can be produced. Carbon monoxide serves as a reactant not only in the reverse shift reaction but also in the methanation reaction and the Fischer-Tropsch reaction, and thus when these reactions are performed, the yield (conversion rate from carbon monoxide) is increased through reusing as described above. In the methanation reaction and the Fischer-Tropsch reaction, the higher the ratio of carbon monoxide (the lower the ratio of carbon dioxide), the higher the yield of the target product and the reaction rate. Further, carbon monoxide becomes an impurity for hydrocarbons such as methane, and thus, it is necessary to remove carbon monoxide, and the removed carbon monoxide is returned to the feed gas. In the above-described example, carbon monoxide is reused, but the reusing is not limited to carbon monoxide. Hydrogen may be reused, or carbon dioxide may be reused. Hydrogen becomes a reactant in any reaction, and thus, the yield (conversion rate from hydrogen) is increased when hydrogen is reused. In addition, carbon dioxide serves as a reactant in the reverse shift reaction and the Sabatier reaction, and thus, when these reactions are performed, the reusing increases the yield (conversion rate from carbon dioxide). Water decreases the reaction rate in any reaction, and thus, the reaction rate can be increased when water is not reused but recovered as described above. To recover water, it is necessary to heat and cool the gas, but water may be recovered as described above depending on various situations such as a situation where it is highly necessary to increase the reaction rate and a situation where the amount of water (water vapor) contained in the gas used for the reaction is large and the reaction rate is too low. In addition, in an amine absorption method, Pressure Swing Adsorption (PSA), or the like adopted for gas separation, water is naturally separated, and therefore is often discarded as it is. Water also acts as an inhibitor against a carbon deposition reaction on the catalyst. Thus, when the catalyst is a noble metal or the like, water may be reused or water may be added from the outside to suppress carbon deposition on the catalyst. Carbon deposition on the catalyst is suppressed like this, but in the method for reducing a carbon oxide according to the present embodiment, reduced iron is used as the catalyst, and thus, even when carbon deposits on the reduced iron, there is no particular problem, and therefore water does not need to be reused.

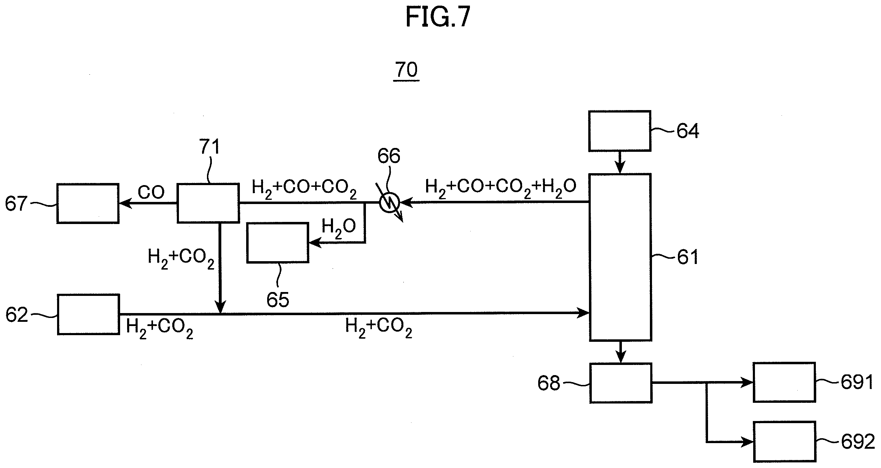

In the reduction, the hydrogen not used in the chemical reaction and the carbon dioxide not used in the chemical reaction may be separated from a product gas obtained by the chemical reaction of the gas containing the carbon oxide introduced into the reaction furnace, and the separated hydrogen and carbon dioxide may be introduced into the reaction furnace and utilized for the chemical reaction. Through this procedure, hydrogen and carbon dioxide not used in the chemical reaction can be reused, and the yields such as the conversion rate from hydrogen and the conversion rate from carbon dioxide can be increased. Thus, the reduction of the carbon oxide contained in the gas with the hydrogen can be more efficiently performed. As an example of such a reducing apparatus, specifically, a reducing apparatus 70 or the like illustrated in FIG. 7 can be exemplified. FIG. 7 is a schematic sectional view illustrating another example of the apparatus for reducing a carbon oxide according to the present embodiment.

The reducing apparatus 70 includes a carbon monoxide separation unit 71 in addition to the configuration of the reducing apparatus 60 illustrated in FIG. 6. The gas taken out from the reaction furnace 61 can also contain hydrogen and carbon dioxide that remain unreacted in the reaction furnace 61. In FIG. 7, it is assumed that the amounts of unreacted hydrogen and carbon dioxide are larger than those of the above-described embodiment, and unreacted hydrogen and carbon dioxide are also denoted as the gas taken out from the reaction furnace 61 in addition to carbon monoxide and water (water vapor) mainly constituting the gas.

The carbon monoxide separation unit 71 is not particularly limited as long as carbon monoxide can be separated from a plurality of gas types, and specific examples thereof include those using various methods such as the Pressure Swing Adsorption (PSA) described above and a cryogenic separation method. By providing the carbon monoxide separation unit 71, the carbon monoxide separated by the carbon monoxide separation unit 71 is recovered in the carbon monoxide recovery unit 67 provided in the reducing apparatus 70, and hydrogen and carbon dioxide not separated in the carbon monoxide separation unit 71 are introduced into the gas containing carbon dioxide and hydrogen from the inflow unit 62 together with part of carbon monoxide. Even with such a configuration, hydrogen and carbon dioxide that have not been used in the reaction can be reused, and the yield (conversion rate from hydrogen, conversion rate from carbon dioxide) can be increased.

The present description discloses techniques of various modes as described above, of which a main technique is summarized below.

A method for reducing a carbon oxide according to a first aspect of the present invention is a method for reducing a carbon oxide, the method including introducing a gas containing hydrogen and a carbon oxide containing at least one of carbon monoxide and carbon dioxide into a reaction furnace, charging reduced iron into the reaction furnace, and reducing the carbon oxide through a chemical reaction using the gas introduced into the reaction furnace as a reactant and the reduced iron as a catalyst.

According to such a configuration, the reaction can be performed through a chemical reaction using the gas introduced into the reaction furnace as a reactant and the reduced iron charged into the reaction furnace as a catalyst. Through this reaction, the carbon oxide contained in the gas can be reduced with the hydrogen. By reducing the carbon oxide such as carbon dioxide, hydrocarbons such as methane and carbon monoxide for obtaining hydrocarbons are obtained, which leads to effective use of carbon dioxide. Thus, it is possible to provide a method for reducing a carbon oxide capable of reducing a carbon oxide such as carbon dioxide without using a catalyst containing costly materials such as Ni, Co, and noble metals. In addition, the reduced iron is less costly than a catalyst containing costly materials such as Ni, Co, and noble metals. Further, the reduced iron used as a catalyst in the reduction method can be effectively used for the production of steel because carbon is deposited on the reduced iron, or the reduced iron is carbonized. From these, even when the reduced iron as a catalyst is replaced at high frequency, an increase in running cost can be suppressed. Thus, the carbon oxide can be reduced, and at the same time, a high catalytic activity state can be maintained by replacing the catalyst before the catalytic activity greatly decreases. In addition, as described above, carbon is deposited on the reduced iron used as a catalyst in the reduction method, or the reduced iron is carbonized, and thus, the carbon oxide introduced into the reaction furnace can be immobilized on the reduced iron as carbon. Steel containing carbon is obtained by producing steel using the reduced iron on which carbon is immobilized like this. From these, the reduction method can also contribute to negative emission in which carbon dioxide is absorbed.

In a method for reducing a carbon oxide according to a second aspect of the present invention, in the method for reducing a carbon oxide according to the first aspect of the present invention, the chemical reaction preferably includes at least one of a Sabatier reaction and a direct Fischer-Tropsch reaction.

According to such a configuration, the carbon oxide such as carbon dioxide can be more suitably reduced.

In a method for reducing a carbon oxide according to a third aspect of the present invention, in the method for reducing a carbon oxide according to the first or second aspect of the present invention, the chemical reaction preferably includes at least one of a methanation reaction and an indirect Fischer-Tropsch reaction.

According to such a configuration, the carbon oxide such as carbon dioxide can be more suitably reduced.

In a method for reducing a carbon oxide according to a fourth aspect of the present invention, in the method for reducing a carbon oxide according to any one of the first to third aspects of the present invention, the chemical reaction preferably includes a reverse shift reaction.

According to such a configuration, the carbon oxide such as carbon dioxide can be more suitably reduced.

In a method for reducing a carbon oxide according to a fifth aspect of the present invention, in the method for reducing a carbon oxide according to any one of the first to fourth aspects of the present invention, the reduced iron preferably has a granular shape.

According to such a configuration, even when the reduced iron charged into the reaction furnace as a catalyst has a granular shape, the carbon oxide contained in the gas can be reduced with the hydrogen. When the reduced iron has a granular shape, the reduced iron as a catalyst is easily exchanged. Thus, a high catalytic activity state can be maintained. Thus, the carbon oxide contained in the gas can be more suitably reduced with the hydrogen. In addition, the reduced iron is often obtained in a granular shape, and in such a case, the reduced iron can be used as it is without performing pulverization. Thus, the reduced iron does not require cost for pulverization or the like. Further, when the reduced iron has a granular shape, and the reduced iron taken out from the reaction furnace is charged into, for example, a blast furnace for producing steel, an increase in ventilation resistance in the blast furnace can be suppressed. A gas passage is required in a blast furnace, and thus, a granular shape is preferable also from this point.

In a method for reducing a carbon oxide according to a sixth aspect of the present invention, in the method for reducing a carbon oxide according to any one of the first to fifth aspects of the present invention, the reduced iron preferably has an equivalent particle diameter of 5 mm or more, a total content of an iron compound, a calcium compound, a silicon compound, a magnesium compound, and an aluminum compound of 90 mass% or more with respect to a total amount of the reduced iron, a content of the iron compound of 75 mass% or more with respect to the total amount of the reduced iron, and a metallization rate of 70% or more.

According to such a configuration, the carbon oxide contained in the gas can be more suitably reduced with the hydrogen.

In a method for reducing a carbon oxide according to a seventh aspect of the present invention, in the method for reducing a carbon oxide according to any one of the first to sixth aspects of the present invention, the reduced iron is preferably reduced iron reduced with a reducing gas containing 50 vol% or more of hydrogen or reduced iron having a carbon content of 2.14 mass% or less.

According to such a configuration, the reduced iron is suitably carbonized (carburized), and the carbonized reduced iron contributes to negative emission. Thus, not only the carbon oxide contained in the gas can be more suitably reduced with the hydrogen, but also the effects of carburization and negative emission can be maximized.

In a method for reducing a carbon oxide according to an eighth aspect of the present invention, in the method for reducing a carbon oxide according to any one of the first to seventh aspects of the present invention, the gas to be introduced into the reaction furnace preferably has a total volume of the hydrogen, the carbon dioxide, and the carbon monoxide of 75 vol% or more with respect to a total volume of the gas, and preferably has a total volume of the hydrogen and the carbon monoxide that is three times or more a total volume of water and the carbon dioxide.

According to such a configuration, the carbon oxide contained in the gas can be more suitably reduced with the hydrogen.

A method for reducing a carbon oxide according to a ninth aspect of the present invention preferably includes, in the method for reducing a carbon oxide according to any one of the first to eighth aspects of the present invention, obtaining a product gas containing carbon monoxide by reducing the carbon oxide, separating the carbon monoxide from the product gas, and introducing the carbon monoxide that has been separated into the reaction furnace.

According to such a configuration, reduction of the carbon oxide contained in the gas with the hydrogen can be more efficiently performed.

A method for reducing a carbon oxide according to a tenth aspect of the present invention preferably includes, in the method for reducing a carbon oxide according to any one of the first to ninth aspects of the present invention, separating the hydrogen not used in the chemical reaction and the carbon dioxide not used in the chemical reaction from a product gas obtained after the gas introduced into the reaction furnace is subjected to the chemical reaction, and introducing the hydrogen and carbon dioxide that have been separated into the reaction furnace.

According to such a configuration, hydrogen and carbon dioxide not used in the chemical reaction can be reused, and the yields such as the conversion rate from hydrogen and the conversion rate from carbon dioxide can be increased. Thus, the reduction of the carbon oxide contained in the gas with the hydrogen can be more efficiently performed.

A method for reducing a carbon oxide according to an eleventh aspect of the present invention preferably includes, in the method for reducing a carbon oxide according to any one of the first to tenth aspects of the present invention, taking out the reduced iron from the reaction furnace after a predetermined time elapses from when the reduced iron is charged into the reaction furnace, and charging reduced iron not used as the catalyst into the reaction furnace.

According to such a configuration, new reduced iron that is not used as a catalyst can be charged before the catalytic activity of the reduced iron charged into the reaction furnace excessively decreases, and thus, the reduced iron charged into the reaction furnace can maintain a high catalytic activity state. Thus, the reduction of the carbon oxide contained in the gas with the hydrogen can be more efficiently performed.

In a method for reducing a carbon oxide according to a twelfth aspect of the present invention, in the method for reducing a carbon oxide according to the eleventh aspect of the present invention, the predetermined time is preferably 30 minutes to 1 month.

According to such a configuration, the catalytic activity of the reduced iron charged into the reaction furnace can be suitably maintained in a high state. Thus, the reduction of the carbon oxide contained in the gas with the hydrogen can be more efficiently performed.

In a method for reducing a carbon oxide according to a thirteenth aspect of the present invention, in the method for reducing a carbon oxide according to any one of the first to twelfth aspects of the present invention, the reaction furnace is preferably a flow type reaction furnace or a batch type reaction furnace.

According to such a configuration, the reduced iron as a catalyst is easily exchanged with high frequency, and thus, the reduction of the carbon oxide contained in the gas with the hydrogen can be more efficiently performed.

A method for producing steel according to a fourteenth aspect of the present invention is a method for producing steel, the method including introducing a gas containing hydrogen and a carbon oxide containing at least one of carbon monoxide and carbon dioxide into a reaction furnace, charging reduced iron into the reaction furnace, reducing the carbon oxide through a chemical reaction using the gas introduced into the reaction furnace as a reactant and the reduced iron as a catalyst, measuring a time from when the reduced iron is charged into the reaction furnace, and taking out the reduced iron from the reaction furnace when a predetermined time elapses from when the reduced iron is charged into the reaction furnace, and charging the reduced iron taken out from the reaction furnace into a blast furnace or an electric furnace.

According to such a configuration, carbon deposits or carbonizes on the reduced iron by using the reduced iron charged into the reaction furnace as a catalyst for reducing the carbon oxide contained in the gas introduced into the reaction furnace with the hydrogen. Such reduced iron can be effectively used as a reactant in producing steel. Thus, it is possible to provide a method for producing steel using the reduction method effectively.

In a method for producing steel according to a fifteenth aspect of the present invention, in the method for producing steel according to the fourteenth aspect of the present invention, the chemical reaction preferably includes at least one of a Sabatier reaction and a direct Fischer-Tropsch reaction.

According to such a configuration, the reduction method can be more effectively used.

In a method for producing steel according to a sixteenth aspect of the present invention, in the method for producing steel according to the fourteenth or fifteenth aspect of the present invention, the chemical reaction preferably includes at least one of a methanation reaction and an indirect Fischer-Tropsch reaction.

According to such a configuration, the reduction method can be more effectively used.

In a method for producing steel according to a seventeenth aspect of the present invention, in the method for producing steel according to any one of the fourteenth to sixteenth aspects of the present invention, the chemical reaction preferably includes a reverse shift reaction.

According to such a configuration, the reduction method can be more effectively used.

In a method for producing steel according to an eighteenth aspect of the present invention, in the method for producing steel according to any one of the fourteenth to seventeenth aspects of the present invention, carbon is preferably deposited on the reduced iron taken out from the reaction furnace.

According to such a configuration, first, at least a part of the reduced iron on which carbon is deposited is usually carbonized by the carbon. Carbon is deposited on the reduced iron used as a catalyst, or the reduced iron is carbonized like this. Then, steel containing the carbon is obtained by producing steel using the reduced iron on which the carbon is deposited and the carbonized reduced iron. Thus, the method for producing steel can also realize a so-called negative emission technique capable of converting at least part of carbon oxides such as carbon dioxide in the atmosphere into carbon and obtaining steel on which the carbon is immobilized.

In a method for producing steel according to a nineteenth aspect of the present invention, in the method for producing steel according to any one of the fourteenth to eighteenth aspects of the present invention, the reaction furnace when the chemical reaction is performed preferably has a temperature in the reaction furnace of 300 to 900°C and a pressure in the reaction furnace of atmospheric pressure or a higher pressure, and the gas to be introduced into the reaction furnace preferably has a sulfur compound content of 10 ppm or less and has a total volume of the hydrogen and the carbon monoxide that is three times or more a total volume of water and the carbon dioxide.

According to such a configuration, carbon further deposits on the reduced iron used as a catalyst for reducing the carbon oxide contained in the gas introduced into the reaction furnace with the hydrogen, or the reduced iron is further carbonized. Such reduced iron can be further effectively used as a reactant in producing steel.

An apparatus for reducing a carbon oxide according to a twentieth aspect of the present invention is an apparatus for reducing a carbon oxide, the apparatus including a reaction furnace, an inflow unit that introduces a gas containing hydrogen and a carbon oxide containing at least one of carbon monoxide and carbon dioxide into the reaction furnace, and a charging unit that charges reduced iron into the reaction furnace, in which the carbon oxide is reduced through a chemical reaction using the gas introduced into the reaction furnace at the inflow unit as a reactant and the reduced iron as a catalyst.

According to such a configuration, similarly to the method for reducing a carbon oxide, it is possible to provide an apparatus for reducing a carbon oxide capable of reducing a carbon oxide such as carbon dioxide without using a catalyst containing costly materials such as Ni, Co, and noble metals.

In an apparatus for reducing a carbon oxide according to a twenty-first aspect of the present invention, in the apparatus for reducing a carbon oxide according to the twentieth aspect of the present invention, the chemical reaction preferably includes at least one of a Sabatier reaction and a direct Fischer-Tropsch reaction.

According to such a configuration, the carbon oxide such as carbon dioxide can be more suitably reduced.

In an apparatus for reducing a carbon oxide according to a twenty-second aspect of the present invention, in the apparatus for reducing a carbon oxide according to the twentieth or twenty-first aspect of the present invention, the chemical reaction preferably includes at least one of a methanation reaction and an indirect Fischer-Tropsch reaction.

According to such a configuration, the carbon oxide such as carbon dioxide can be more suitably reduced.

In an apparatus for reducing a carbon oxide according to a twenty-third aspect of the present invention, in the apparatus for reducing a carbon oxide according to any one of the twentieth to twenty-second aspects of the present invention, the chemical reaction preferably includes a reverse shift reaction.

According to such a configuration, the carbon oxide such as carbon dioxide can be more suitably reduced.

In an apparatus for reducing a carbon oxide according to a twenty-fourth aspect of the present invention, in the apparatus for reducing a carbon oxide according to any one of the twentieth to twenty-third aspects of the present invention, the reduced iron preferably has a granular shape.

According to such a configuration, even when the reduced iron charged into the reaction furnace as a catalyst has a granular shape, the carbon oxide contained in the gas can be reduced with the hydrogen. When the reduced iron has a granular shape, the reduced iron as a catalyst is easily exchanged. Thus, a high catalytic activity state can be maintained. Thus, the carbon oxide contained in the gas can be more suitably reduced with the hydrogen.

In an apparatus for reducing a carbon oxide according to a twenty-fifth aspect of the present invention, in the apparatus for reducing a carbon oxide according to any one of the twentieth to twenty-fourth aspects of the present invention, the reduced iron preferably has an equivalent particle diameter of 5 mm or more, a total content of an iron compound, a calcium compound, a silicon compound, a magnesium compound, and an aluminum compound of 90 mass% or more with respect to a total amount of the reduced iron, a content of the iron compound of 75 mass% or more with respect to the total amount of the reduced iron, and a metallization rate of 70% or more.

According to such a configuration, the carbon oxide contained in the gas can be more suitably reduced with the hydrogen.

In an apparatus for reducing a carbon oxide according to a twenty-sixth aspect of the present invention, in the apparatus for reducing a carbon oxide according to any one of the twentieth to twenty-fifth aspects of the present invention, the reduced iron is preferably reduced iron reduced with a reducing gas containing 50 vol% or more of hydrogen or reduced iron having a carbon content of 2.14 mass% or less.

According to such a configuration, the reduced iron is suitably carbonized (carburized), and the carbonized reduced iron contributes to negative emission. Thus, not only the carbon oxide contained in the gas can be more suitably reduced with the hydrogen, but also the effects of carburization and negative emission can be maximized.

In an apparatus for reducing a carbon oxide according to a twenty-seventh aspect of the present invention, in the apparatus for reducing a carbon oxide according to any one of the twentieth to twenty-sixth aspects of the present invention, the gas to be introduced into the reaction furnace at the inflow unit preferably has a total volume of the hydrogen, the carbon dioxide, and the carbon monoxide of 75 vol% or more with respect to a total volume of the gas, and has a total volume of the hydrogen and the carbon monoxide that is three times or more a total volume of water and the carbon dioxide.

According to such a configuration, the carbon oxide contained in the gas can be more suitably reduced with the hydrogen.

An apparatus for reducing a carbon oxide according to a twenty-eighth aspect of the present invention preferably includes, in the apparatus for reducing a carbon oxide according to any one of the twentieth to twenty-seventh aspects of the present invention, a reuse unit that separates the carbon monoxide from a product gas containing carbon monoxide generated by reducing the carbon oxide and uses the separated carbon monoxide as at least part of the gas to be introduced into the reaction furnace.

According to such a configuration, reduction of the carbon oxide contained in the gas with the hydrogen can be more efficiently performed.

In an apparatus for reducing a carbon oxide according to a twenty-ninth aspect of the present invention, in the apparatus for reducing a carbon oxide according to any one of the twentieth to twenty-eighth aspects of the present invention, the hydrogen not used in the chemical reaction and the carbon dioxide not used in the chemical reaction are preferably separated from a product gas obtained after the gas introduced into the reaction furnace is subjected to the chemical reaction, and the hydrogen and carbon dioxide that have been separated are preferably introduced into the reaction furnace.

According to such a configuration, hydrogen and carbon dioxide not used in the chemical reaction can be reused, and the yields such as the conversion rate from hydrogen and the conversion rate from carbon dioxide can be increased. Thus, the reduction of the carbon oxide contained in the gas with the hydrogen can be more efficiently performed.

An apparatus for reducing a carbon oxide according to a thirtieth aspect of the present invention preferably further includes, in the apparatus for reducing a carbon oxide according to any one of the twentieth to twenty-ninth aspects of the present invention, a discharge unit that takes out the reduced iron from the reaction furnace when a predetermined time elapses from when the reduced iron is charged into the reaction furnace at the charging unit, in which the charging unit preferably charges reduced iron not used as the catalyst into the reaction furnace after the reduced iron is taken out from the reaction furnace at the discharge unit.

According to such a configuration, new reduced iron that is not used as a catalyst can be charged before the catalytic activity of the reduced iron charged into the reaction furnace excessively decreases, and thus, the reduced iron charged into the reaction furnace can maintain a high catalytic activity state. Thus, the reduction of the carbon oxide contained in the gas with the hydrogen can be more efficiently performed.

In an apparatus for reducing a carbon oxide according to a thirty-first aspect of the present invention, in the apparatus for reducing a carbon oxide according to the thirtieth aspect of the present invention, the predetermined time is preferably 30 minutes to 1 month.

According to such a configuration, the catalytic activity of the reduced iron charged into the reaction furnace can be suitably maintained in a high state. Thus, the reduction of the carbon oxide contained in the gas with the hydrogen can be more efficiently performed.

In an apparatus for reducing a carbon oxide according to a thirty-second aspect of the present invention, in the apparatus for reducing a carbon oxide according to any one of the twentieth to thirty-first aspects of the present invention, the reaction furnace is preferably a flow type reaction furnace or a batch type reaction furnace.

According to such a configuration, the reduced iron as a catalyst is easily exchanged with high frequency, and thus, the reduction of the carbon oxide contained in the gas with the hydrogen can be more efficiently performed.

An apparatus for producing steel according to a thirty-third aspect of the present invention is an apparatus for producing steel, the apparatus including a reaction furnace, an inflow unit that introduces a gas containing hydrogen and a carbon oxide containing at least one of carbon monoxide and carbon dioxide into the reaction furnace, a charging unit that charges reduced iron into the reaction furnace, a discharge unit that takes out the reduced iron from the reaction furnace when a predetermined time elapses from when the reduced iron is charged into the reaction furnace at the charging unit, and an iron supply unit that charges the reduced iron taken out from the reaction furnace at the discharge unit into a blast furnace or an electric furnace, in which in the reaction furnace, the carbon oxide is reduced through a chemical reaction using the gas introduced into the reaction furnace as a reactant and the reduced iron as a catalyst.

According to such a configuration, carbon deposits or carbonizes on the reduced iron by using the reduced iron charged into the reaction furnace as a catalyst for reducing the carbon oxide contained in the gas introduced into the reaction furnace with the hydrogen. Such reduced iron can be effectively used as a reactant in producing steel. Thus, it is possible to provide an apparatus for producing steel using the reduction method effectively.

In an apparatus for producing steel according to a thirty-fourth aspect of the present invention, in the apparatus for producing steel according to the thirty-third aspect of the present invention, the chemical reaction preferably includes at least one of a Sabatier reaction and a direct Fischer-Tropsch reaction.

According to such a configuration, the reduction method can be more effectively used.

In an apparatus for producing steel according to a thirty-fifth aspect of the present invention, in the apparatus for producing steel according to the thirty-third or thirty-fourth aspect of the present invention, the chemical reaction preferably includes at least one of a methanation reaction and an indirect Fischer-Tropsch reaction.

According to such a configuration, the reduction method can be more effectively used.

In an apparatus for producing steel according to a thirty-sixth aspect of the present invention, in the apparatus for producing steel according to any one of the thirty-third to thirty-fifth aspects of the present invention, the chemical reaction preferably includes a reverse shift reaction.

According to such a configuration, the reduction method can be more effectively used.

In an apparatus for producing steel according to a thirty-seventh aspect of the present invention, in the apparatus for producing steel according to any one of the thirty-third to thirty-sixth aspects of the present invention, carbon is preferably deposited on the reduced iron taken out from the reaction furnace.

According to such a configuration, first, at least a part of the reduced iron on which carbon is deposited is usually carbonized by the carbon. Carbon is deposited on the reduced iron used as a catalyst, or the reduced iron is carbonized like this. Then, steel containing the carbon is obtained by producing steel using the reduced iron on which the carbon is deposited and the carbonized reduced iron. Thus, the apparatus for producing steel can also realize a so-called negative emission technique capable of converting at least part of carbon oxides such as carbon dioxide in the atmosphere into carbon and obtaining steel on which the carbon is immobilized.

In an apparatus for producing steel according to a thirty-eighth aspect of the present invention, in the apparatus for producing steel according to any one of the thirty-third to thirty-seventh aspects of the present invention, the reaction furnace when the chemical reaction is performed preferably has a temperature in the reaction furnace of 300 to 900°C and a pressure in the reaction furnace of atmospheric pressure or a higher pressure, and the gas to be introduced into the reaction furnace at the inflow unit preferably has a sulfur compound content of 10 ppm or less and has a total volume of the hydrogen and the carbon monoxide that is three times or more a total volume of water and the carbon dioxide.

According to such a configuration, carbon further deposits on the reduced iron used as a catalyst for reducing the carbon oxide contained in the gas introduced into the reaction furnace with the hydrogen, or the reduced iron is further carbonized. Such reduced iron can be further effectively used as a reactant in producing steel.

According to the present invention, it is possible to provide a method for reducing a carbon oxide and an apparatus for reducing a carbon oxide capable of reducing a carbon oxide such as carbon dioxide without using a catalyst containing costly materials such as Ni, Co, and noble metals. According to the present invention, it is possible to provide a method for producing steel and an apparatus for producing steel that effectively utilize the reduction method.

Hereinafter, the present invention will be described more specifically with reference to Examples, but the scope of the present invention is not limited by the Examples at all.

### Examples

Specifically, for example, the following reaction was performed. Reduced iron (reduced iron reduced with a reducing gas containing 50 vol% of hydrogen, the reduced iron having an equivalent particle diameter of about 10 to 13 mm, a total content of an iron compound, a calcium compound, a silicon compound, a magnesium compound and an aluminum compound of 99 mass% with respect to the total amount of the reduced iron, a content of the iron compound of 96 mass% with respect to the total amount of the reduced iron, and a carbon content of almost 0 mass%) was charged to a reaction furnace. The composition of the reduced iron was specifically about 95 mass% of metal Fe, which is an iron compound, less than 1 mass% of FeO, less than 1 mass% of CaO, which is a calcium compound, about 2 mass% of SiO₂, which is a silicon compound, less than 1 mass% of MgO, which is a magnesium compound, less than 1 mass% of Al₂O₃, which is an aluminum compound, and less than 100 mass ppm of the total amount of sulfur components. A feed gas (a gas in which the total volume of the hydrogen 66 vol%, the carbon dioxide 17 vol%, nitrogen 17 vol%, the hydrogen, the carbon dioxide, and the carbon monoxide is about 83 vol%, which is 80 vol% or more with respect to the total volume of the gas, and the total volume of the hydrogen and the carbon monoxide is about 4 times with respect to the total volume of water and the carbon dioxide) was introduced into the reaction furnace. The feed gas does not contain a sulfur compound, that is, the content of the sulfur compound is 0 ppm with respect to the feed gas. The feed gas was caused to react with the reduced iron for a contact time of about several seconds at a temperature of 350 to 450°C in the reaction furnace and a pressure of 500 kPaA in the reaction furnace. Through this procedure, a reaction mainly consisting of the Sabatier reaction occurred. The reaction rate was calculated by measuring the gas discharged from the reaction furnace by gas chromatography-mass spectrometry. As a result, the methane conversion rate was 20% or more in some cases. In addition, after the reaction, the reduced iron was analyzed, and the adhesion of carbon to the surface was confirmed. It was also confirmed that the methane conversion rate can be increased by increasing the contact time between the feed gas and the reduced iron.

This application is based on Japanese Patent Application No. 2024-025194 filed on February 22, 2024, the content of which is included in the present application.

Although the present invention has been appropriately and sufficiently described through the embodiments above to express the present invention, it should be recognized that a person skilled in the art can easily modify and/or improve the above-described embodiments. Therefore, unless a change or improvement made by a person skilled in the art is at a level departing from the scope of rights of the claims described in claims, the change or improvement is interpreted to be included in the scope of rights of the claims.

### Industrial Applicability

According to the present invention, provided are a method for reducing a carbon oxide and an apparatus for reducing a carbon oxide capable of reducing a carbon oxide such as carbon dioxide without using a catalyst containing costly materials such as Ni, Co, and noble metals. According to the present invention, also provided are a method for producing steel and an apparatus for producing steel that effectively utilize the reduction method.

## Claims

1. A method for reducing a carbon oxide, the method comprising:
introducing a gas containing hydrogen and a carbon oxide containing at least one of carbon monoxide and carbon dioxide into a reaction furnace;
charging reduced iron into the reaction furnace; and
reducing the carbon oxide through a chemical reaction using the gas introduced into the reaction furnace as a reactant and the reduced iron as a catalyst.

2. The method for reducing a carbon oxide according to claim 1, wherein the chemical reaction includes at least one of a Sabatier reaction and a direct Fischer-Tropsch reaction.

3. The method for reducing a carbon oxide according to claim 1, wherein the chemical reaction includes at least one of a methanation reaction and an indirect Fischer-Tropsch reaction.

4. The method for reducing a carbon oxide according to claim 1, wherein the chemical reaction includes a reverse shift reaction.

5. The method for reducing a carbon oxide according to claim 1, wherein the reduced iron has a granular shape.

6. The method for reducing a carbon oxide according to claim 1, wherein
the reduced iron has:
an equivalent particle diameter of 5 mm or more;
a total content of an iron compound, a calcium compound, a silicon compound, a magnesium compound, and an aluminum compound of 90 mass% or more with respect to a total amount of the reduced iron;
a content of the iron compound of 75 mass% or more with respect to the total amount of the reduced iron; and
a metallization rate of 70% or more.

7. The method for reducing a carbon oxide according to claim 1, wherein the reduced iron is reduced iron reduced with a reducing gas containing 50 vol% or more of hydrogen or reduced iron having a carbon content of 2.14 mass% or less.

8. The method for reducing a carbon oxide according to claim 1, wherein
the gas to be introduced into the reaction furnace has:
a total volume of the hydrogen, the carbon dioxide, and the carbon monoxide of 75 vol% or more with respect to a total volume of the gas; and
a total volume of the hydrogen and the carbon monoxide that is three times or more a total volume of water and the carbon dioxide.

9. The method for reducing a carbon oxide according to claim 1, the method comprising:
obtaining a product gas containing carbon monoxide by reducing the carbon oxide;
separating the carbon monoxide from the product gas; and
introducing the carbon monoxide that has been separated into the reaction furnace.

10. The method for reducing a carbon oxide according to claim 1, the method comprising:
separating the hydrogen not used in the chemical reaction and the carbon dioxide not used in the chemical reaction from a product gas obtained after the gas introduced into the reaction furnace is subjected to the chemical reaction; and
introducing the hydrogen and carbon dioxide that have been separated into the reaction furnace.

11. The method for reducing a carbon oxide according to claim 1, the method comprising:
taking out the reduced iron from the reaction furnace after a predetermined time elapses from when the reduced iron is charged into the reaction furnace; and
charging reduced iron not used as the catalyst into the reaction furnace.

12. The method for reducing a carbon oxide according to claim 11, wherein the predetermined time is 30 minutes to 1 month.

13. The method for reducing a carbon oxide according to claim 1, wherein the reaction furnace is a flow type reaction furnace or a batch type reaction furnace.

14. A method for producing steel, the method comprising:
introducing a gas containing hydrogen and a carbon oxide containing at least one of carbon monoxide and carbon dioxide into a reaction furnace;
charging reduced iron into the reaction furnace;
reducing the carbon oxide through a chemical reaction using the gas introduced into the reaction furnace as a reactant and the reduced iron as a catalyst;
taking out the reduced iron from the reaction furnace when a predetermined time elapses from when the reduced iron is charged into the reaction furnace; and
charging the reduced iron taken out from the reaction furnace into a blast furnace or an electric furnace.

15. The method for producing steel according to claim 14, wherein the chemical reaction includes at least one of a Sabatier reaction and a direct Fischer-Tropsch reaction.

16. The method for producing steel according to claim 14, wherein the chemical reaction includes at least one of a methanation reaction and an indirect Fischer-Tropsch reaction.

17. The method for producing steel according to claim 14, wherein the chemical reaction includes a reverse shift reaction.

18. The method for producing steel according to claim 14, wherein carbon is deposited on the reduced iron taken out from the reaction furnace.

19. The method for producing steel according to claim 14, wherein
the reaction furnace when the chemical reaction is performed has a temperature in the reaction furnace of 300 to 900°C and a pressure in the reaction furnace of atmospheric pressure or a higher pressure, and
the gas to be introduced into the reaction furnace has:
a sulfur compound content of 10 ppm or less; and
a total volume of the hydrogen and the carbon monoxide that is three times or more a total volume of water and the carbon dioxide.

20. An apparatus for reducing a carbon oxide, the apparatus comprising:
a reaction furnace;
an inflow unit that introduces a gas containing hydrogen and a carbon oxide containing at least one of carbon monoxide and carbon dioxide into the reaction furnace; and
a charging unit that charges reduced iron into the reaction furnace,
wherein the carbon oxide is reduced through a chemical reaction using the gas introduced into the reaction furnace at the inflow unit as a reactant and the reduced iron as a catalyst.

21. The apparatus for reducing a carbon oxide according to claim 20, wherein the chemical reaction includes at least one of a Sabatier reaction and a direct Fischer-Tropsch reaction.

22. The apparatus for reducing a carbon oxide according to claim 20, wherein the chemical reaction includes at least one of a methanation reaction and an indirect Fischer-Tropsch reaction.

23. The apparatus for reducing a carbon oxide according to claim 20, wherein the chemical reaction includes a reverse shift reaction.

24. The apparatus for reducing a carbon oxide according to claim 20, wherein the reduced iron has a granular shape.

25. The apparatus for reducing a carbon oxide according to claim 20, wherein
the reduced iron has:
an equivalent particle diameter of 5 mm or more;
a total content of an iron compound, a calcium compound, a silicon compound, a magnesium compound, and an aluminum compound of 90 mass% or more with respect to a total amount of the reduced iron;
a content of the iron compound of 75 mass% or more with respect to the total amount of the reduced iron; and
a metallization rate of 70% or more.

26. The apparatus for reducing a carbon oxide according to claim 20, wherein the reduced iron is reduced iron reduced with a reducing gas containing 50 vol% or more of hydrogen or reduced iron having a carbon content of 2.14 mass% or less.

27. The apparatus for reducing a carbon oxide according to claim 20, wherein
the gas to be introduced into the reaction furnace at the inflow unit has:
a total volume of the hydrogen, the carbon dioxide, and the carbon monoxide of 75 vol% or more with respect to a total volume of the gas; and
a total volume of the hydrogen and the carbon monoxide that is three times or more a total volume of water and the carbon dioxide.

28. The apparatus for reducing a carbon oxide according to claim 20, the apparatus further comprising a reuse unit that separates the carbon monoxide from a product gas containing carbon monoxide generated by reducing the carbon oxide and uses the separated carbon monoxide as at least part of the gas to be introduced into the reaction furnace.

29. The apparatus for reducing a carbon oxide according to claim 20, wherein
the hydrogen not used in the chemical reaction and the carbon dioxide not used in the chemical reaction are separated from a product gas obtained after the gas introduced into the reaction furnace is subjected to the chemical reaction, and
the hydrogen and carbon dioxide that have been separated are introduced into the reaction furnace.

30. The apparatus for reducing a carbon oxide according to claim 20, the apparatus further comprising a discharge unit that takes out the reduced iron from the reaction furnace when a predetermined time elapses from when the reduced iron is charged into the reaction furnace at the charging unit, wherein
the charging unit charges reduced iron not used as the catalyst into the reaction furnace after the reduced iron is taken out from the reaction furnace at the discharge unit.

31. The apparatus for reducing a carbon oxide according to claim 30, wherein the predetermined time is 30 minutes to 1 month.

32. The apparatus for reducing a carbon oxide according to claim 20, wherein the reaction furnace is a flow type reaction furnace or a batch type reaction furnace.

33. An apparatus for producing steel, the apparatus comprising:
a reaction furnace;
an inflow unit that introduces a gas containing hydrogen and a carbon oxide containing at least one of carbon monoxide and carbon dioxide into the reaction furnace;
a charging unit that charges reduced iron into the reaction furnace;
a discharge unit that takes out the reduced iron from the reaction furnace when a predetermined time elapses from when the reduced iron is charged into the reaction furnace at the charging unit; and
an iron supply unit that charges the reduced iron taken out from the reaction furnace at the discharge unit into a blast furnace or an electric furnace,
wherein in the reaction furnace, the carbon oxide is reduced through a chemical reaction using the gas introduced into the reaction furnace as a reactant and the reduced iron as a catalyst.

34. The apparatus for producing steel according to claim 33, wherein the chemical reaction includes at least one of a Sabatier reaction and a direct Fischer-Tropsch reaction.

35. The apparatus for producing steel according to claim 33, wherein the chemical reaction includes at least one of a methanation reaction and an indirect Fischer-Tropsch reaction.

36. The apparatus for producing steel according to claim 33, wherein the chemical reaction includes a reverse shift reaction.

37. The apparatus for producing steel according to claim 33, wherein carbon is deposited on the reduced iron taken out from the reaction furnace.

38. The apparatus for producing steel according to claim 33, wherein
the reaction furnace when the chemical reaction is performed has a temperature in the reaction furnace of 300 to 900°C and a pressure in the reaction furnace of atmospheric pressure or a higher pressure, and
the gas to be introduced into the reaction furnace at the inflow unit has:
a sulfur compound content of 10 ppm or less; and
a total volume of the hydrogen and the carbon monoxide that is three times or more a total volume of water and the carbon dioxide.
